# EUROPEAN PATENT APPLICATION

(11) **EP 4 383 764 A1**
(43) Date of publication of application: **12.06.2024**
(21) Application number: 22863344.2
(22) Date of filing: 27.08.2022
(51) Int. Cl.: H04W 4/40

(54) **RESOURCE DETERMINATION METHOD AND APPARATUS**

(30) Priority: 01.09.2021 CN 202111020979
(71) Applicant: Huawei Technologies Co., Ltd., Shenzhen, Guangdong 518129 (CN)
(72) Inventor: WANG, Ting, Shenzhen, Guangdong 518129 (CN); SU, Hongjia, Shenzhen, Guangdong 518129 (CN); LU, Lei, Shenzhen, Guangdong 518129 (CN)
(74) Representative: MERH-IP Matias Erny Reichl Hoffmann Patentanwälte PartG mbB
(86) International application number: PCT/CN2022/115330
(87) International publication number: WO 2023/030208

(57) **Abstract**

This application provides a resource determining method and an apparatus, to mitigate a resource conflict between an LTE-V2X apparatus and an NR-V2X apparatus. In the method, a terminal apparatus may obtain configuration information, first sidelink control information, and second sidelink control information. The first sidelink control information is control information used for E-UTRA radio access, and the second sidelink control information is control information used for NR radio access. The terminal apparatus determines an available time-frequency resource based on the first sidelink control information and the second sidelink control information. Based on the foregoing solution, the terminal apparatus can determine, in a resource pool based on the first sidelink control information and the second sidelink control information, a time-frequency resource that can be used by the terminal apparatus to send sidelink control information and data information, thereby mitigating the resource conflict between the LTE-V2X apparatus and the NR-V2X apparatus.

## Description

### CROSS-REFERENCE TO RELATED APPLICATIONS

This application claims priority to Chinese Patent Application No. 202111020979.5, filed with the China National Intellectual Property Administration on September 1, 2021 and entitled "RESOURCE DETERMINING METHOD AND APPARATUS", which is incorporated herein by reference in its entirety.

### TECHNICAL FIELD

This application relates to the field of wireless communication technologies, and in particular, to a resource determining method and an apparatus.

### BACKGROUND

Based on a network corresponding to a long term evolution (long term evolution, LTE) technology proposed by the 3rd generation partnership project (the 3rd generation partnership project, 3GPP), an internet of vehicles technology for vehicle-to-everything (vehicle-to-everything, V2X) communication is proposed. The V2X communication is communication between a vehicle and everything in the external world.

LTE-V2X meets some basic requirements in a V2X scenario. However, existing LTE-V2X cannot effectively support an application scenario like fully intelligent driving or autonomous driving in the future. With development of new radio (new radio, NR) technologies in the 3GPP standard organization, NR-V2X further develops. For example, the NR-V2X may support a lower transmission delay, more reliable communication transmission, a higher throughput, and better user experience, to meet requirements of a wider range of application scenarios.

When an LTE-V2X communication requirement and an NR-V2X communication requirement coexist, how to avoid a resource conflict between an LTE-V2X apparatus and an NR-V2X apparatus becomes an urgent problem to be resolved.

### SUMMARY

This application provides a resource determining method and an apparatus, to mitigate a resource conflict between an LTE-V2X apparatus and an NR-V2X apparatus.

According to a first aspect, a resource determining method is provided. The method may be performed by a terminal apparatus. The terminal apparatus may be a terminal device, a chip with a terminal-like function, or an apparatus that may be used in a terminal. In the method, the terminal apparatus obtains configuration information. The configuration information indicates a first resource pool, where the first resource pool includes a plurality of time-frequency resources. The terminal apparatus receives first sidelink control information and second sidelink control information, where the first sidelink control information is control information used for evolved universal terrestrial radio access (evolved universal terrestrial radio access, E-UTRA), and the second sidelink control information is control information used for NR radio access. The terminal apparatus determines an available time-frequency resource from the first resource pool based on the first sidelink control information and the second sidelink control information, where the available time-frequency resource is used to send first sidelink information. The first sidelink information includes third sidelink control information, or the first sidelink information includes first data information, or the first sidelink information includes third sidelink control information and first sidelink information, where the third sidelink control information is control information used for the NR radio access, and the first data information is data information used for the NR radio access. The E-UTRA may also be referred to as LTE, and the control information used for the E-UTRA radio access may also be referred to as control information used for LTE radio access.

Optionally, the terminal apparatus excludes a first resource set from the first resource pool to obtain the available time-frequency resource, where the first resource set is determined based on the first sidelink control information and the second sidelink control information.

Based on the foregoing solution, the terminal apparatus may obtain the first sidelink control information used for the E-UTRA radio access and the second sidelink control information used for the NR radio access. Therefore, the terminal apparatus can determine, in a resource pool based on the first sidelink control information and the second sidelink control information, a time-frequency resource that can be used by the terminal apparatus to send sidelink control information and the data information, to avoid a conflict with a resource used for the E-UTRA radio access and a resource that is of another terminal apparatus and that uses the NR radio access. In this way, a resource conflict between LTE-V2X communication and NR-V2X communication is avoided.

In a possible implementation, the terminal apparatus determines the available time-frequency resource from a resource selection window, where the resource selection window is some time-frequency resources in the first resource pool.

In a possible implementation, the first sidelink control information indicates a first time-frequency resource, and the first sidelink control information includes a first priority. The terminal apparatus determines a second priority based on the first priority and a priority adjustment parameter, where the second priority is higher than or equal to the first priority. The terminal apparatus determines a threshold of first reference signal received power (reference signal received power, RSRP) based on the second priority. When an RSRP value of the first time-frequency resource is higher than the threshold of the first RSRP, the terminal apparatus excludes the first time-frequency resource from the first resource pool. The second sidelink control information indicates a second time-frequency resource, where the second sidelink control information includes a third priority. The terminal apparatus determines a threshold of second RSRP based on the third priority. When an RSRP value of the second time-frequency resource is higher than the threshold of the second RSRP, the terminal apparatus excludes the second time-frequency resource from the first resource pool. A resource that remains after the first time-frequency resource and/or the second time-frequency resource are/is excluded from the first resource pool is the available time-frequency resource.

Optionally, when the RSRP value of the first time-frequency resource is no higher than the threshold of the first RSRP, the terminal apparatus does not exclude the first time-frequency resource from the first resource pool, in other words, the available time-frequency resource includes the first time-frequency resource. When the RSRP value of the second time-frequency resource is higher than the threshold of the second RSRP, the terminal apparatus excludes the second time-frequency resource from the first resource pool.

Optionally, when the RSRP value of the first time-frequency resource is higher than the threshold of the first RSRP, the terminal apparatus excludes the first time-frequency resource from the first resource pool. When the RSRP value of the second time-frequency resource is no higher than the threshold of the second RSRP, the terminal apparatus does not exclude the second time-frequency resource from the first resource pool, in other words, the available time-frequency resource includes the second time-frequency resource.

Optionally, when the RSRP value of the first time-frequency resource is no higher than the threshold of the first RSRP, the terminal apparatus does not exclude the first time-frequency resource from the first resource pool, in other words, the available time-frequency resource includes the first time-frequency resource. When the RSRP value of the second time-frequency resource is no higher than the threshold of the second RSRP, the terminal apparatus does not exclude the second time-frequency resource from the first resource pool, in other words, the available time-frequency resource includes the second time-frequency resource.

Optionally, the first resource set includes the first time-frequency resource and/or the second time-frequency resource.

Based on the foregoing solution, the terminal apparatus may exclude, from the first resource pool, the first time-frequency resource whose RSRP is higher than the threshold of the first RSRP and the second time-frequency resource whose RSRP is higher than the threshold of the second RSRP. When determining the available time-frequency resource, the terminal apparatus excludes, as much as possible, a time-frequency resource that has great impact on the LTE-V2X communication and the NR-V2X communication.

In a possible implementation, a non-sensing time-frequency resource is excluded from the first resource pool to obtain a second resource pool, and the available time-frequency resource is determined from the second resource pool based on the first sidelink control information and the second sidelink control information.

Optionally, the available time-frequency resource is a time-frequency resource that remains after the first time-frequency resource and/or the second time-frequency resource are/is excluded from the second resource pool.

Optionally, the first resource set further includes the non-sensing time-frequency resource.

Based on the foregoing solution, the terminal apparatus may exclude the non-sensing time-frequency resource in the first resource pool from the first resource pool, that is, exclude a resource that has been used to send sidelink control information. The resource may be a resource used for the E-UTRA or a resource used for the NR. Therefore, the impact on the NR-V2X communication or the LTE-V2X communication may be reduced.

In a possible implementation, the first time-frequency resource includes a plurality of periodically reserved time-frequency resources, and the second time-frequency resource includes a plurality of periodically reserved time-frequency resources. A periodicity corresponding to the periodic resource included in the first time-frequency resource is indicated in the first sidelink control information, and a periodicity corresponding to the periodic resource included in the second time-frequency resource is indicated in the second sidelink control information.

Based on the foregoing solution, the terminal apparatus may exclude, from the first resource pool, the periodically reserved first time-frequency resource and the periodically reserved second time-frequency resource, so that the impact on the NR-V2X communication and the LTE-V2X communication may be reduced.

In a possible implementation, the first time-frequency resource and a third time-frequency resource are excluded from the first resource pool to obtain the available time-frequency resource; or the second time-frequency resource and a fourth time-frequency resource are excluded from the first resource pool to obtain the available time-frequency resource; or the first time-frequency resource, the second time-frequency resource, a third time-frequency resource, and a fourth time-frequency resource are excluded from the first resource pool to obtain the available time-frequency resource. The third time-frequency resource does not belong to the first time-frequency resource, a time-frequency resource of a physical sidelink feedback channel (physical sidelink feedback channel, PSFCH) corresponding to the third time-frequency resource belongs to the first time-frequency resource, the RSRP value of the first time-frequency resource is higher than the threshold of the first RSRP, a time-frequency resource of a PSFCH corresponding to the fourth time-frequency resource belongs to the second time-frequency resource, and the RSRP value of the second time-frequency resource is higher than the threshold of the second RSRP.

Optionally, the available time-frequency resource is a time-frequency resource that remains after the non-sensing time-frequency resource, the first time-frequency resource, and the third time-frequency resource are excluded from the first resource pool. Alternatively, the available time-frequency resource is a time-frequency resource that remains after the non-sensing time-frequency resource, the second time-frequency resource, and the fourth time-frequency resource are excluded from the first resource pool. Alternatively, the available time-frequency resource is a time-frequency resource that remains after the non-sensing time-frequency resource, the first time-frequency resource, the second time-frequency resource, the third time-frequency resource, and the fourth time-frequency resource are excluded from the first resource pool.

Optionally, the first resource set further includes the third time-frequency resource and/or the fourth time-frequency resource.

Based on the foregoing solution, the terminal apparatus may exclude the third time-frequency resource and the fourth time-frequency resource from the first resource pool, provided that the time-frequency resource of the PSFCH corresponding to the third time-frequency resource and the time-frequency resource of the PSFCH corresponding to the fourth time-frequency resource are occupied. Otherwise, although a time-frequency resource used to send sidelink information is an available resource, a feedback resource corresponding to the time-frequency resource is an unavailable resource. By excluding the third time-frequency resource and/or the fourth time-frequency resource, the terminal apparatus may receive the feedback information corresponding to the first data information, thereby improving data transmission performance.

In a possible implementation, the configuration information further indicates that the first resource pool includes a time-frequency resource used to send sidelink information of the E-UTRA radio access and a time-frequency resource used to send sidelink information of the NR radio access. In other words, the terminal apparatus determines, based on an indication of the configuration information, that a resource in the first resource pool may be used for E-UTRAradio access communication, or may be used for NR radio access communication.

In a possible implementation, the configuration information further indicates a first priority threshold, and that the third sidelink control information and the first data information are sent on the available time-frequency resource includes: When priorities of the third sidelink control information and the first data information are higher than or equal to the first priority threshold, the third sidelink control information and the first data information are sent on the available time-frequency resource. When determining that a priority of to-be-sent sidelink information is higher than a priority indicated in the configuration information, the terminal apparatus determines that the available time-frequency resource may be used to send the first sidelink information, for example, sidelink control information, sidelink data, or both. Based on a priority indication in the configuration information, only sidelink information with a higher priority occupies the available time-frequency resource. Therefore, a sidelink communication resource may be saved through proper resource allocation.

According to a second aspect, a resource determining method is provided. The method may be performed by a terminal apparatus. The terminal apparatus may be a terminal device, a chip with a terminal-like function, or an apparatus that may be used in a terminal. In the method, the terminal apparatus obtains configuration information. The configuration information indicates a first resource pool, where the first resource pool includes a plurality of time-frequency resources. The terminal apparatus receives first sidelink control information, where the first sidelink control information is control information used for E-UTRA radio access. The terminal apparatus determines an available time-frequency resource from the first resource pool based on the first sidelink control information, where the available time-frequency resource is used to send third sidelink control information and first data information, the third sidelink control information is control information used for NR radio access, and the first data information is data information used for the NR radio access.

Optionally, the terminal apparatus excludes a second resource set from the first resource pool to obtain the available time-frequency resource, where the second resource set is determined based on the first sidelink control information.

Based on the foregoing solution, the terminal apparatus may obtain the first sidelink control information used for the E-UTRA radio access. Therefore, the terminal apparatus can determine, in a resource pool based on the first sidelink control information, a time-frequency resource that can be used by the terminal apparatus to send sidelink control information and the data information, to avoid a conflict with a resource using the E-UTRA radio access. In this way, a resource conflict between LTE-V2X communication and NR-V2X communication is avoided.

In a possible implementation, the terminal apparatus determines the available time-frequency resource from a resource selection window, where the resource selection window is some time-frequency resources in the first resource pool.

In a possible implementation, the first sidelink control information indicates a first time-frequency resource, and the first sidelink control information includes a first priority. The terminal apparatus determines a second priority based on the first priority and a priority adjustment parameter, where the second priority is higher than or equal to the first priority. The terminal apparatus determines a threshold of first RSRP based on the second priority. When an RSRP value of the first time-frequency resource is higher than the threshold of the first RSRP, the terminal apparatus excludes the first time-frequency resource from the first resource pool. A resource that remains after the first time-frequency resource is excluded from the first resource pool is the available time-frequency resource.

In a possible implementation, the terminal apparatus further receives second sidelink control information, where the second sidelink control information is control information used for the NR radio access. That the terminal apparatus determines an available time-frequency resource from the first resource pool based on the first sidelink control information includes: The terminal apparatus determines the available time-frequency resource from the first resource pool based on the first sidelink control information and the second sidelink control information. The second sidelink control information indicates a second time-frequency resource, where the second sidelink control information further includes a third priority. The terminal apparatus determines a threshold of second RSRP based on the third priority. When an RSRP value of the second time-frequency resource is higher than the threshold of the second PSPR, the terminal apparatus excludes the second time-frequency resource from the first resource pool. In this case, the second resource set, that is, an excluded resource, includes the second time-frequency resource.

Optionally, when the RSRP value of the first time-frequency resource is no higher than the threshold of the first RSRP, the terminal apparatus does not exclude the first time-frequency resource from the first resource pool, in other words, the available time-frequency resource includes the first time-frequency resource.

Optionally, the second resource set includes the first time-frequency resource.

Based on the foregoing solution, the terminal apparatus may exclude, from the first resource pool, the first time-frequency resource whose RSRP is higher than the threshold of the first RSRP. When determining the available time-frequency resource, the terminal apparatus excludes, as much as possible, a time-frequency resource that has great impact on the LTE-V2X communication.

In a possible implementation, a non-sensing time-frequency resource is excluded from the first resource pool to obtain a second resource pool, and the available time-frequency resource is determined from the second resource pool based on the first sidelink control information.

Optionally, the available time-frequency resource is a time-frequency resource that remains after the first time-frequency resource is excluded from the second resource pool.

Optionally, the second resource set further includes the non-sensing time-frequency resource.

Based on the foregoing solution, the terminal apparatus may exclude the non-sensing time-frequency resource in the first resource pool from the first resource pool, that is, exclude a resource that has been used to send sidelink control information. The resource may be a resource using the E-UTRA or a resource using the NR. Therefore, the impact on the LTE-V2X communication or the NR-V2X communication may be reduced.

In a possible implementation, the first time-frequency resource includes a plurality of periodically reserved time-frequency resources.

Based on the foregoing solution, the terminal apparatus may exclude the periodically reserved first time-frequency resource from the first resource pool, so that the impact on the NR-V2X communication may be reduced.

In a possible implementation, the first time-frequency resource and a third time-frequency resource are excluded from the first resource pool to obtain the available time-frequency resource. The third time-frequency resource does not belong to the first time-frequency resource, a time-frequency resource of a PSFCH corresponding to the third time-frequency resource belongs to the first time-frequency resource, and the RSRP value of the first time-frequency resource is higher than the threshold of the first RSRP.

In a possible implementation, the second time-frequency resource and a fourth time-frequency resource are excluded from the first resource pool to obtain the available time-frequency resource. The fourth time-frequency resource does not belong to the second time-frequency resource, a time-frequency resource of a PSFCH corresponding to the fourth time-frequency resource belongs to the second time-frequency resource, and the RSRP value of the second time-frequency resource is higher than the threshold of the second RSRP.

In a possible implementation, the first time-frequency resource, the second time-frequency resource, a third time-frequency resource, and a fourth time-frequency resource are excluded from the first resource pool to obtain the available time-frequency resource.

Optionally, the available time-frequency resource is a time-frequency resource that remains after the non-sensing time-frequency resource, the first time-frequency resource, and the third time-frequency resource are excluded from the first resource pool.

Optionally, the second resource set further includes the third time-frequency resource.

Based on the foregoing solution, the terminal apparatus may exclude the third time-frequency resource from the first resource pool, provided that the time-frequency resource of the PSFCH corresponding to the third time-frequency resource is occupied, so that the terminal apparatus can receive feedback information corresponding to the first data information, thereby improving data transmission performance.

In a possible implementation, the configuration information further indicates that the first resource pool includes a time-frequency resource used to send sidelink information of the E-UTRA radio access and a time-frequency resource used to send sidelink information of the NR radio access.

In a possible implementation, the configuration information further indicates a first priority threshold, and that the third sidelink control information and the first data information are sent on the available time-frequency resource includes: When priorities of the third sidelink control information and the first data information are higher than or equal to the first priority threshold, the third sidelink control information and the first data information are sent on the available time-frequency resource.

According to a third aspect, a resource determining method is provided. The method may be performed by a terminal apparatus. The terminal apparatus may be a terminal device, a chip with a terminal-like function, or an apparatus that may be used in a terminal. In the method, the terminal apparatus receives first sidelink control information and second sidelink control information, where the first sidelink control information is control information used for E-UTRA radio access, and the second sidelink control information is control information used for NR radio access. The first sidelink control information includes a first priority, and the second sidelink control information includes a third priority. The terminal apparatus determines a threshold of first RSRP based on the first priority. The terminal apparatus determines a first available time-frequency resource based on the threshold of the first RSRP. The terminal apparatus determines a threshold of second RSRP based on the third priority. The terminal apparatus determines a second available time-frequency resource based on the threshold of the second RSRP. A third available time-frequency resource is an intersection of the first available time-frequency resource and the second available time-frequency resource. The third available time-frequency resource is used to send third sidelink control information and first data information, where the third sidelink control information is the control information used for the NR radio access, and the first data information is data information used for the NR radio access.

Based on the foregoing solution, the terminal apparatus may determine the first available time-frequency resource based on the first sidelink control information used for the E-UTRA radio access, determine the second available time-frequency resource based on the second sidelink control information used for the NR radio access, and determine, based on the first available time-frequency resource and the second available time-frequency resource, a time-frequency resource that can be used by the terminal apparatus to send sidelink control information and the data information, thereby mitigating a conflict between LTE-V2X communication and NR-V2X communication.

In a possible implementation, the first sidelink control information indicates a first time-frequency resource. When RSRP of the first time-frequency resource is higher than the threshold of the first RSRP, the terminal apparatus excludes the first time-frequency resource from a first resource pool, to obtain the first available time-frequency resource. The first resource pool includes a plurality of time-frequency resources. When the RSRP of the first time-frequency resource is lower than the threshold of the first RSRP, the first available time-frequency resource is the first resource pool.

Based on the foregoing solution, the terminal apparatus may exclude, from the first resource pool, the first time-frequency resource whose RSRP is higher than the threshold of the first RSRP. When determining an available time-frequency resource, the terminal apparatus excludes, as much as possible, a time-frequency resource that has great impact on the LTE-V2X communication.

In a possible implementation, the second sidelink control information indicates a second time-frequency resource. When RSRP of the second time-frequency resource is higher than the threshold of the second RSRP, the terminal apparatus excludes the second time-frequency resource from the first resource pool, to obtain the second available time-frequency resource. The first resource pool includes a plurality of time-frequency resources. When the RSRP of the second time-frequency resource is lower than the threshold of the second RSRP, the second available time-frequency resource is the first resource pool.

Based on the foregoing solution, the terminal apparatus may exclude, from the first resource pool, the second time-frequency resource whose RSRP is higher than the threshold of the second RSRP. When determining an available time-frequency resource, the terminal apparatus excludes, as much as possible, a time-frequency resource that has great impact on the NR-V2X communication.

According to a fourth aspect, a communication apparatus is provided, including a processing unit and a communication unit. The communication unit is configured to obtain configuration information, where the configuration information indicates a first resource pool, and the first resource pool includes a plurality of time-frequency resources.

The communication unit is further configured to receive first sidelink control information and second sidelink control information, where the first sidelink control information is control information used for E-UTRA radio access, and the second sidelink control information is control information used for NR radio access.

The processing unit is configured to determine an available time-frequency resource from the first resource pool based on the first sidelink control information and the second sidelink control information, where the available time-frequency resource is used to send third sidelink control information and first data information, the third sidelink control information is the control information used for the NR radio access, and the first data information is data information used for the NR radio access.

In a design, when determining the available time-frequency resource from the first resource pool based on the first sidelink control information and the second sidelink control information, the processing unit is specifically configured to: the first sidelink control information indicates a first time-frequency resource, where the first sidelink control information includes a first priority; determine a second priority based on the first priority and a priority adjustment parameter, where the second priority is higher than or equal to the first priority; determine a threshold of first RSRP based on the second priority; exclude the first time-frequency resource from the first resource pool when an RSRP value of the first time-frequency resource is higher than the threshold of the first RSRP; the second sidelink control information indicates a second time-frequency resource, where the second sidelink control information includes a third priority; determine a threshold of second RSRP based on the third priority; and exclude the second time-frequency resource from the first resource pool when an RSRP value of the second time-frequency resource is higher than the threshold of the second RSRP, where a resource that remains after the first time-frequency resource and/or the second time-frequency resource are/is excluded from the first resource pool is the available time-frequency resource.

In a design, the processing unit is further configured to exclude a non-sensing time-frequency resource from the first resource pool to obtain a second resource pool. When determining the available time-frequency resource from the first resource pool based on the first sidelink control information and the second sidelink control information, the processing unit is specifically configured to determine the available time-frequency resource from the second resource pool based on the first sidelink control information and the second sidelink control information.

In a design, the first time-frequency resource includes a plurality of periodically reserved time-frequency resources, and the second time-frequency resource includes a plurality of periodically reserved time-frequency resources.

In a design, the processing unit is further configured to: exclude the first time-frequency resource and a third time-frequency resource from the first resource pool to obtain the available time-frequency resource; or exclude the second time-frequency resource and a fourth time-frequency resource from the first resource pool to obtain the available time-frequency resource; or exclude the first time-frequency resource, the second time-frequency resource, a third time-frequency resource, and a fourth time-frequency resource from the first resource pool to obtain the available time-frequency resource. The third time-frequency resource does not belong to the first time-frequency resource, a time-frequency resource of a physical sidelink feedback channel PSFCH corresponding to the third time-frequency resource belongs to the first time-frequency resource, the RSRP value of the first time-frequency resource is higher than the threshold of the first RSRP, a time-frequency resource of a physical sidelink feedback channel PSFCH corresponding to the fourth time-frequency resource belongs to the second time-frequency resource, and the RSRP value of the second time-frequency resource is higher than the threshold of the second RSRP.

In a design, the configuration information further indicates that the first resource pool includes a time-frequency resource used to send sidelink information of the E-UTRA radio access and a time-frequency resource used to send sidelink information of the NR radio access.

In a design, the configuration information further indicates a first priority threshold, and that the third sidelink control information and the first data information are sent on the available time-frequency resource includes: When priorities of the third sidelink control information and the first data information are higher than or equal to the first priority threshold, the third sidelink control information and the first data information are sent on the available time-frequency resource.

According to a fifth aspect, a communication apparatus is provided, including a processing unit and a communication unit. The communication unit is configured to obtain configuration information. The configuration information indicates a first resource pool, where the first resource pool includes a plurality of time-frequency resources. The communication unit is further configured to receive first sidelink control information, where the first sidelink control information is control information used for E-UTRA radio access. The processing unit is configured to determine an available time-frequency resource from the first resource pool based on the first sidelink control information, where the available time-frequency resource is used to send third sidelink control information and first data information, the third sidelink control information is control information used for NR radio access, and the first data information is data information used for the NR radio access.

In a design, the first sidelink control information indicates a first time-frequency resource, and the first sidelink control information includes a first priority. The processing unit is further configured to: determine a second priority based on the first priority and a priority adjustment parameter, where the second priority is higher than or equal to the first priority; determine a threshold of first RSRP based on the second priority; and exclude the first time-frequency resource from the first resource pool when an RSRP value of the first time-frequency resource is higher than the threshold of the first RSRP. A resource that remains after the first time-frequency resource is excluded from the first resource pool is the available time-frequency resource.

In a design, the processing unit is further configured to: exclude a non-sensing time-frequency resource from the first resource pool to obtain a second resource pool; and determine the available time-frequency resource from the second resource pool based on the first sidelink control information.

In a design, the first time-frequency resource includes a plurality of periodically reserved time-frequency resources.

In a design, the processing unit is further configured to exclude the first time-frequency resource and a third time-frequency resource from the first resource pool to obtain the available time-frequency resource. The third time-frequency resource does not belong to the first time-frequency resource, a time-frequency resource of a PSFCH corresponding to the third time-frequency resource belongs to the first time-frequency resource, and the RSRP value of the first time-frequency resource is higher than the threshold of the first RSRP.

In a design, the configuration information further indicates that the first resource pool includes a time-frequency resource used to send sidelink information of the E-UTRA radio access and a time-frequency resource used to send sidelink information of the NR radio access.

In a design, the configuration information further indicates a first priority threshold, and that the third sidelink control information and the first data information are sent on the available time-frequency resource includes: When priorities of the third sidelink control information and the first data information are higher than or equal to the first priority threshold, the third sidelink control information and the first data information are sent on the available time-frequency resource.

According to a sixth aspect, a communication apparatus is provided, including a processing unit and a communication unit. The communication unit is configured to receive first sidelink control information and second sidelink control information, where the first sidelink control information is control information used for E-UTRAradio access, and the second sidelink control information is control information used for NR radio access. The first sidelink control information includes a first priority, and the second sidelink control information includes a third priority. The processing unit configured to: determine a threshold of first RSRP based on the first priority; determine a first available time-frequency resource based on the threshold of the first RSRP; determine a threshold of second RSRP based on the third priority; and determine a second available time-frequency resource based on the threshold of the second RSRP. A third available time-frequency resource is an intersection of the first available time-frequency resource and the second available time-frequency resource. The third available time-frequency resource is used to send third sidelink control information and first data information, where the third sidelink control information is the control information used for the NR radio access, and the first data information is data information used for the NR radio access.

In a design, when determining the first available time-frequency resource based on the threshold of the first RSRP, the processing unit is specifically configured to: the first sidelink control information indicates a first time-frequency resource; exclude the first time-frequency resource from a first resource pool when RSRP of the first time-frequency resource is higher than the threshold of the first RSRP, to obtain the first available time-frequency resource, where the first resource pool includes a plurality of time-frequency resources. When the RSRP of the first time-frequency resource is lower than the threshold of the first RSRP, the first available time-frequency resource is the first resource pool.

In a design, when determining the second available time-frequency resource based on the threshold of the second RSRP, the processing unit is specifically configured to: the second sidelink control information indicates a second time-frequency resource; exclude the second time-frequency resource from the first resource pool when RSRP of the second time-frequency resource is higher than the threshold of the second RSRP, to obtain the second available time-frequency resource, where the first resource pool includes a plurality of time-frequency resources. When the RSRP of the second time-frequency resource is lower than the threshold of the second RSRP, the second available time-frequency resource is the first resource pool.

According to a seventh aspect, a communication apparatus is provided, including a processor, where the processor is coupled to a memory, the memory is configured to store a computer program or instructions, and the processor is configured to execute the computer program or the instructions, to perform the method in various possible implementations of the foregoing aspects. The memory may be located inside or outside the apparatus. There are one or more processors.

According to an eighth aspect, this application provides a communication apparatus, including a processor and an interface circuit, where the interface circuit is configured to communicate with another apparatus, and the processor is configured to implement the method in various possible implementations of the foregoing aspects.

According to a ninth aspect, a communication apparatus is provided. The apparatus includes a logic circuit and an input/output interface.

In an example, the input/output interface is configured to input configuration information, where the configuration information indicates a first resource pool, and the first resource pool includes a plurality of time-frequency resources. The input/output interface is further configured to input first sidelink control information and second sidelink control information, where the first sidelink control information is control information used for E-UTRA radio access, and the second sidelink control information is control information used for NR radio access. The logic circuit is configured to determine an available time-frequency resource from the first resource pool based on the first sidelink control information and the second sidelink control information. The available time-frequency resource is used to send third sidelink control information and first data information. The third sidelink control information is the control information used for the NR radio access, and the first data information is data information used for the NR radio access. For more detailed descriptions of the solution, refer to related descriptions of the first aspect.

In another example, the input/output interface is configured to input first sidelink control information and second sidelink control information, where the first sidelink control information is control information used for E-UTRA radio access, and the second sidelink control information is control information used for NR radio access. The first sidelink control information includes a first priority, and the second sidelink control information includes a third priority. The logic circuit is configured to: determine a threshold of first RSRP based on the first priority; determine a first available time-frequency resource based on the threshold of the first RSRP; determine a threshold of second RSRP based on the third priority; and determine a second available time-frequency resource based on the threshold of the second RSRP. A third available time-frequency resource is an intersection of the first available time-frequency resource and the second available time-frequency resource. The third available time-frequency resource is used to send third sidelink control information and first data information. The third sidelink control information is the control information used for the NR radio access, and the first data information is data information used for the NR radio access.

For more detailed descriptions of the solution, refer to the related descriptions of the second aspect.

According to a tenth aspect, this application further provides a chip system, including a processor, configured to perform the method in various possible implementations of the foregoing aspects.

According to an eleventh aspect, this application further provides a computing program product, including computer-executable instructions. When the communication-apparatus-executable instructions are run on a computer, the method in various possible implementations of the foregoing aspects is performed.

According to a twelfth aspect, this application further provides a computer-readable storage medium. The computer-readable storage medium stores a computer program or instructions. When the instructions are run on a communication apparatus, the method in various possible implementations of the foregoing aspects is implemented.

### BRIEF DESCRIPTION OF DRAWINGS

FIG. 1 is a schematic diagram of a V2X communication scenario according to an embodiment of this application;
FIG. 2 is a schematic diagram of a communication system according to an embodiment of this application;
FIG. 3 is an example flowchart of a resource determining method according to an embodiment of this application;
FIG. 4 is a schematic diagram of excluding a non-sensing time-frequency resource according to an embodiment of this application;
FIG. 5 is a schematic diagram of excluding a non-sensing time-frequency resource according to an embodiment of this application;
FIG. 6 is a schematic diagram of excluding a first time-frequency resource according to an embodiment of this application;
FIG. 7 is a schematic diagram of excluding a second time-frequency resource according to an embodiment of this application;
FIG. 8 is a schematic diagram of excluding a third time-frequency resource according to an embodiment of this application;
FIG. 9 is an example flowchart of a resource determining method according to an embodiment of this application;
FIG. 10 is an example flowchart of a resource determining method according to an embodiment of this application;
FIG. 11 is a structural diagram of a communication module of a first terminal according to an embodiment of this application;
FIG. 12 is a structural diagram of a communication module of a first terminal according to an embodiment of this application;
FIG. 13 is a structural diagram of a communication module of a first terminal according to an embodiment of this application;
FIG. 14 is a structural diagram of a communication module of a first terminal according to an embodiment of this application;
FIG. 15 is a structural diagram of a communication apparatus according to an embodiment of this application;
FIG. 16 is a structural diagram of a communication apparatus according to an embodiment of this application; and
FIG. 17 is a schematic diagram of a terminal device according to an embodiment of this application.

### DESCRIPTION OF EMBODIMENTS

With development of wireless communication technologies, people have an increasing requirement for a high data rate, and have an increasing requirement for a proximity service for knowing and communicating with surrounding people or things. Therefore, a device-to-device (device-to-device, D2D) technology emerges. Application of the D2D technology may reduce load of a cellular network, reduce battery power consumption of a user equipment (user equipment, UE), and improve a data rate, thereby meeting the requirement for the proximity service. The D2D technology allows a plurality of UEs supporting a D2D function to discover another UE or communicate with another UE when there is a network infrastructure or no network infrastructure. In view of features and advantages of the D2D technology, a D2D technology-based internet of vehicles application scenario is proposed. However, a delay requirement is quite high in this scenario for the sake of safety.

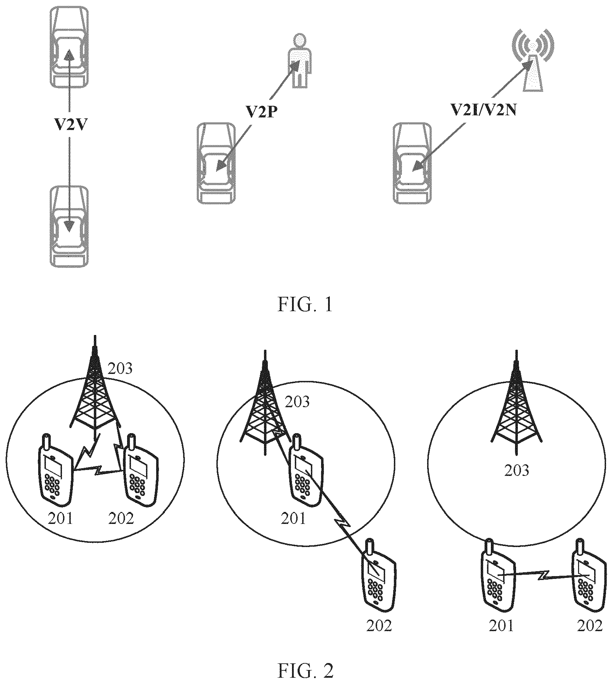

Therefore, in a network of an LTE technology proposed by 3GPP, a V2X internet of vehicles technology is proposed. V2X communication is communication between a vehicle and everything in the external world. Refer to FIG. 1. The V2X communication includes vehicle to vehicle (vehicle to vehicle, V2V) communication, vehicle to pedestrian (vehicle to pedestrian, V2P) communication, vehicle to infrastructure (vehicle to infrastructure, V2I) communication, and vehicle to network (vehicle to network, V2N) communication.

The V2X communication is intended for high-speed devices represented by vehicles, and is a basic and key technology to be used in future scenarios that have a quite high requirement on a communication delay, such as scenarios of intelligent vehicles, autonomous driving, and intelligent transportation systems. LTE-V2X communication may support a communication scenario with network coverage and network coverage, and a resource allocation manner of the LTE-V2X communication may be a network access device scheduling mode, for example, an E-UTRANodeB (E-UTRANodeB, eNB) scheduling mode and a UE self-selection mode. Based on the V2X technology, a vehicle user (vehicle UE, V-UE) can send some information of the vehicle user, for example, information such as a location, a speed, and an intention (turn, lane change, or reverse), to a surrounding V-UE. Similarly, the V-UE also receives information about a surrounding user in real time.

LTE-V2X meets some basic requirements in a V2X scenario. However, existing LTE-V2X cannot effectively support an application scenario like fully intelligent driving or autonomous driving in the future. With development of SGNR technologies in the 3GPP standard organization, 5G NR-V2X further develops. For example, the 5G NR-V2X may support a lower transmission delay, more reliable communication transmission, a higher throughput, and better user experience, to meet requirements of a wider range of application scenarios.

When an LTE-V2X communication requirement and an NR-V2X communication requirement coexist, how to avoid a resource conflict between an LTE-V2X apparatus and an NR-V2X apparatus becomes an urgent problem to be resolved. Coexistence means that communication of the LTE-V2X apparatus causes as low interference as possible or no interference to communication of the NR-V2X apparatus, or communication of the NR-V2X apparatus causes as low interference as possible or no interference to communication of the LTE-V2X apparatus. Coexistence does not necessarily require that an LTE-V2X communication function is completely compatible with an NR-V2X communication function, but requires that impact of either function on the other is as small as possible. In addition, NR-V2X faces a problem of spectrum resource insufficiency.

Embodiments of this application provide a resource determining method. The method may mitigate the spectrum resource conflict between the LTE-V2X apparatus and the NR-V2X apparatus when the LTE-V2X apparatus and the NR-V2X apparatus coexist. A resource indication method provided in embodiments of this application may be applied to a system, like V2X and D2D, in which a user end directly communicates with another user end. The technical solutions provided in embodiments of this application may be applicable to a communication scenario with network coverage or a communication scenario without network coverage. FIG. 2 is a communication system applicable to a resource indication method according to an embodiment of this application. A communication system 200 may include a terminal apparatus 201 and a terminal apparatus 202. Optionally, the communication system 200 may further include a network device 203.

Both the terminal apparatus 201 and the terminal apparatus 202 may be within coverage of the network device 203, or either the terminal apparatus 201 or the terminal apparatus 202 may be within coverage of the network device 203. For example, the terminal apparatus 201 is not within the coverage of the network device. Alternatively, neither the terminal apparatus 201 nor the terminal apparatus 202 is within the coverage of the network device 203. This is not specifically limited in this application.

The network device includes, for example, an access network (access network, AN) device like a base station (for example, an access point), and may be a device that communicates with a wireless terminal device through an air interface in one or more cells in an access network. Alternatively, the network device is, for example, a road side unit (road side unit, RSU) in a vehicle-to-everything (vehicle-to-everything, V2X) technology. The base station may be configured to encode information bits, and send encoded information to a terminal device. Correspondingly, the terminal device receives the information sent by the base station, and decodes the information. In addition, the terminal device may also be configured to encode information bits, and send encoded information to the base station. Correspondingly, the base station receives the information sent by the terminal device, and decodes the information. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolutional NodeB) in an LTE system or a long term evolution-advanced (long term evolution-advanced, LTE-A) system, may include a next generation NodeB (next generation NodeB, gNB) in a 5th generation mobile communication technology (5th generation, 5G) NR system (also referred to as an NR system for short), or may include a central unit (centralized unit, CU) and a distributed unit (distributed unit, DU) in a cloud access network (cloud radio access network, Cloud RAN) system. This is not limited in embodiments of this application.

A terminal apparatus may also be referred to as a user equipment, including a device that provides a voice and/or data connectivity for a user. Specifically, the terminal apparatus includes a device that provides a voice for the user, includes a device that provides data connectivity for the user, or includes a device that provides a voice and data connectivity for the user. For example, a handheld device with a wireless connection function or a processing device connected to a wireless modem may be included. The user equipment may communicate with a core network through a radio access network (radio access network, RAN), and exchange a voice or data with the RAN, or exchange a voice and data with the RAN. The user equipment may include a user equipment (user equipment, UE), a wireless user equipment, a mobile user equipment, a device-to-device (device-to-device, D2D) user equipment, and a vehicle-to-everything (vehicle-to-everything, V2X) user equipment. For example, a user equipment in a vehicle-to-everything (vehicle-to-everything, V2X) technology is a roadside unit RSU. Alternatively, the user equipment further includes a machine-to-machine/machine-type communication (machine-to-machine/machine-type communication, M2M/MTC) user equipment, an internet of things (internet of things, IoT) user equipment, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the user equipment may include a mobile phone (or referred to as a "cellular" phone), a computer having a mobile user equipment, a portable, pocket-sized, handheld, or computer-built-in mobile apparatus, or the like. For example, the user equipment may be a device like a personal communication service (personal communication service, PCS) phone, a cordless telephone set, a session initiation protocol (session initiation protocol, SIP) phone, a wireless local loop (wireless local loop, WLL) station, or a personal digital assistant (personal digital assistant, PDA). The user equipment may alternatively include a limited device, for example, a device with low power consumption, a device with a limited storage capability, or a device with a limited computing capability. For example, the user equipment includes an information sensing device like a barcode, radio frequency identification (radio frequency identification, RFID), a sensor, a global positioning system (global positioning system, GPS), or a laser scanner.

By way of example and not limitation, in embodiments of this application, the user equipment may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, a wearable intelligent device includes a full-featured and large-sized device that may implement all or a part of functions without depending on a smartphone, for example, a smart watch or smart glasses, and includes a device that is dedicated to a specific type of application function and needs to work with another device like a smartphone, for example, a vital sign monitoring device like a smart band, a smart helmet, or smart jewelry.

If the user equipment described above is located in a vehicle (for example, placed in the vehicle or installed in the vehicle), the user equipment may be considered as a vehicle-mounted user equipment. The vehicle-mounted user equipment is, for example, also referred to as an on-board unit (on-board unit, OBU).

In embodiments of this application, an apparatus configured to implement a function of the user equipment may be a user equipment, or may be an apparatus, for example, a chip system, that can support the user equipment in implementing the function. The apparatus may be installed in the user equipment. In embodiments of this application, the chip system may include a chip, or may include a chip and another discrete component. In the technical solutions provided in embodiments of this application, an example in which an apparatus configured to implement a function of a terminal is a terminal is used to describe the technical solutions provided in embodiments of this application.

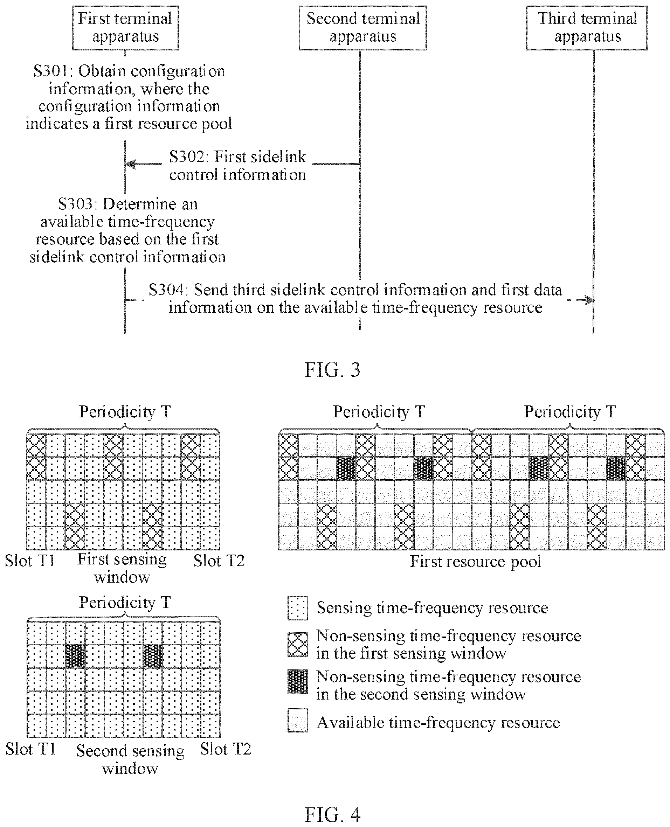

FIG. 3 is an example flowchart of a resource determining method according to an embodiment of this application. The method may include the following operations. In the method embodiment shown in FIG. 3, a first terminal apparatus is an apparatus that supports an NR-V2X communication function. In a surrounding area of the first terminal apparatus, one or more apparatuses that support an LTE-V2X communication function are performing communication, such as a second communication apparatus.

S301: The first terminal apparatus obtains configuration information, where the configuration information indicates a first resource pool.

The first resource pool may be configured by a network device, or may be pre-configured. The first resource pool may include a plurality of time-frequency resources. A frequency domain resource in the first resource pool includes at least one sub-channel, and one sub-channel includes several physical resource blocks (physical resource blocks, PRBs). The frequency domain resource in the first resource pool may include several slots.

The first resource pool may be a resource pool used to receive information, in other words, the first terminal apparatus may receive information on the time-frequency resource included in the first resource pool. Alternatively, the first resource pool may be a resource pool used to send information, in other words, the first terminal apparatus may send information on the time-frequency resource included in the first resource pool. Alternatively, the first resource pool may be a resource pool used to receive information and send information, in other words, the first terminal apparatus may send information and receive information on the time-frequency resource included in the first resource pool.

In an example, the configuration information further indicates that the first resource pool includes a time-frequency resource used to send sidelink information of E-UTRA radio access and a time-frequency resource used to send sidelink information of NR radio access. In other words, the terminal apparatus determines, based on an indication of the configuration information, that a resource in the first resource pool may be used for E-UTRA radio access communication, or may be used for NR radio access communication. The first resource pool may be a resource pool shared by an LTE-V2X apparatus and an NR-V2X apparatus. To be specific, the apparatus that supports the LTE-V2X communication function and the apparatus that supports the NR-V2X communication function may send or receive information on the time-frequency resources included in the first resource pool.

In another example, the first resource pool may be a resource pool of an LTE-V2X apparatus. To be specific, the apparatus that supports the LTE-V2X communication function may send or receive information on the time-frequency resource included in the first resource pool. The first terminal apparatus may obtain configuration information of a second resource pool, where the configuration information of the second resource pool indicates the second resource pool. The second resource pool herein may be a resource pool of an NR-V2X apparatus. To be specific, the apparatus that supports the NR-V2X communication function may send or receive information on a time-frequency resource included in the second resource pool. The first terminal apparatus may obtain configuration information of a third resource pool, where the configuration information of the third resource pool indicates the third resource pool. The third resource pool may be a resource pool of the NR-V2X apparatus and the LTE-V2X apparatus. It should be noted that the time-frequency resource included in the first resource pool, the time-frequency resource included in the second resource pool, and a time-frequency resource included in the third resource pool partially or wholly overlap.

S302: The first terminal apparatus obtains first sidelink control information.

That the first terminal apparatus obtains first sidelink control information may also be understood as that the first terminal apparatus senses the first sidelink control information. The first sidelink control information is control information used for the E-UTRA radio access. The E-UTRA may also be referred to as LTE, and the control information used for the E-UTRA radio access may also be referred to as control information used for LTE radio access. In other words, the first sidelink control information may be sideline control information from a terminal that supports the LTE-V2X communication function, for example, a second terminal apparatus.

In an example, the first terminal apparatus may sense the first sidelink control information via a sensing window. The sensing window may be configured by a network device or pre-configured. The first terminal apparatus may obtain sensing window configuration information, where the sensing window configuration information indicates a start slot and an end slot of the sensing window. In this case, a time domain resource in the sensing window may include all slots between the start slot and the end slot, and a frequency domain resource in the sensing window may include all sub-channels of the first resource pool. The first terminal apparatus may sense the first sidelink control information via the sensing window.

S303: The first terminal apparatus determines an available time-frequency resource based on the first sidelink control information.

Optionally, the first terminal apparatus sends the first sidelink information on the available time-frequency resource. The first sidelink information includes third sidelink control information, or the first sidelink information includes first data information, or the first sidelink information includes third sidelink control information and first data information. The third sidelink control information is control information used for NR radio access, and the first data information is data information used for the NR radio access.

Optionally, the method further includes S304: The first terminal apparatus sends the third sidelink control information and the first data information on the available time-frequency resource.

It should be noted that the first terminal apparatus may send the third sidelink control information and the first data information to a terminal using the NR radio access, for example, a third terminal apparatus, or another terminal other than the third terminal apparatus.

Optionally, the configuration information further indicates a first priority threshold. When priorities of the third sidelink control information and the first data information are higher than or equal to the first priority threshold, the terminal apparatus sends the third sidelink control information and the first data information on the available time-frequency resource. When determining that a priority of to-be-sent sidelink information is higher than a priority indicated in the configuration information, the terminal apparatus determines that the available time-frequency resource may be used to send the first sidelink information, for example, sidelink control information, sidelink data, or both. Based on a priority indication in the configuration information, only sidelink information with a higher priority occupies the available time-frequency resource. Therefore, a sidelink communication resource may be saved through proper resource allocation.

In an example, the first terminal apparatus may determine a resource selection window, and a start slot and an end slot of the resource selection window may be pre-configured. Time-frequency resources included in the resource selection window may be some or all of a plurality of time-frequency resources included in the first resource pool. A time domain resource in the resource selection window is all slots between the start slot and the end slot of the resource selection window, and a frequency domain resource in the resource selection window is all sub-channels of the first resource pool. In another example, the first terminal apparatus may determine the available time-frequency resource from the first resource pool.

In a possible implementation, the first terminal apparatus may exclude a non-sensing time-frequency resource from the first resource pool, to obtain the second resource pool. In other words, the first terminal apparatus excludes, from the first resource pool, a time-frequency resource that does not sense the first sidelink control information. The non-sensing time-frequency resource is used by the first terminal apparatus to send the third sidelink control information or fourth control information. The fourth control information is control information used for the NR radio access, and the fourth control information may be sent to the network device or may be sent to another terminal, for example, the third terminal apparatus.

Refer to FIG. 4. A first terminal apparatus determines a sensing window (a dashed area in FIG. 4 shows a non-sensing time-frequency resource). The first terminal apparatus excludes, from a first resource pool, a time-frequency resource corresponding to a non-sensing slot in the sensing window.

Optionally, a higher-layer parameter "sl ResourceReservePeriodList" indicates a periodicity, or the first terminal apparatus may set a parameter "Resource reservation period" field in first sidelink control information to one periodicity. The first terminal apparatus may exclude the time-frequency resource corresponding to the non-sensing slot from the first resource pool based on the periodicity. For example, the higher-layer parameter indicates a periodicity T, and the first terminal apparatus may determine the non-sensing slot + q × T slots, where q = 0, 1, 2, 3, .... The first terminal apparatus may exclude, from the first resource pool, a time-frequency resource corresponding to the non-sensing slot + q × T slots.

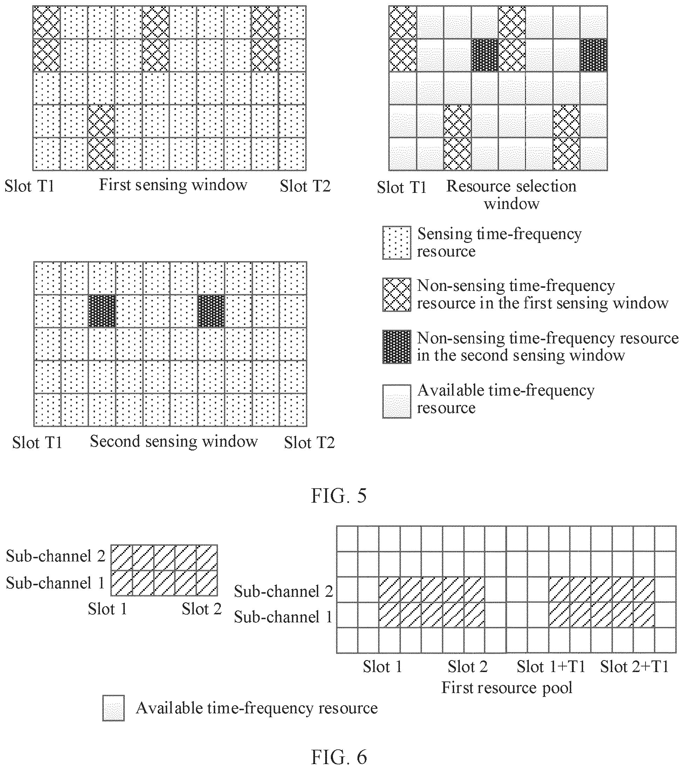

In another possible implementation, the first terminal apparatus may exclude a non-sensing time-frequency resource (a dashed area shown in FIG. 5) from a resource selection window. Refer to FIG. 5. A first terminal apparatus may determine a resource selection window based on a first resource pool and a pre-configured start slot and end slot. The first terminal apparatus determines a sensing window. The first terminal apparatus determines to exclude, from the resource selection window, a non-sensing time-frequency resource included in a first sensing window. Optionally, the first terminal apparatus excludes, from the resource selection window, a time-frequency resource corresponding to a non-sensing slot + q × T slots.

Optionally, after the first terminal apparatus excludes the non-sensing time-frequency resource from the resource selection window, if a ratio of a remaining time-frequency resource in the resource selection window to all time-frequency resources in the resource selection window is less than or equal to a first preset value, the first terminal apparatus may re-determine the resource selection window and re-exclude the non-sensing time-frequency resource. For example, the first terminal apparatus may give up this resource selection and re-obtain first sidelink control information and second sidelink control information, or the first terminal apparatus may not exclude a non-sensing time-frequency resource used to send control information used for E-UTRA radio access.

In this embodiment of this application, the first terminal apparatus may further determine an available time-frequency resource from the first resource pool based on RSRP of a time-frequency resource indicated in the first sidelink control information. Specifically, the first sidelink control information includes a first priority. The first terminal apparatus may determine a second priority based on the first priority and a priority adjustment parameter. The priority adjustment parameter may be pre-configured, indicated by a network device, or pre-defined in a protocol. The second priority is higher than or equal to the first priority. Assuming that the first priority is P1, and the priority adjustment parameter is r, the second priority P2 = P1 - r, and 0 ≤ r ≤ a priority of first data information.

The second priority is related to a threshold of first RSRP. A lower second priority indicates a higher threshold of the first RSRP. On the contrary, a higher second priority indicates a higher threshold of the first RSRP. The first terminal apparatus may determine the threshold of the first RSRP from a pre-configured threshold set of the RSRP based on the second priority. It is assumed that the second priority is P2, the threshold of the first RSRP may be a (P2 + (the priority of the first data information - 1) × 8)^{th} threshold.

Optionally, the first terminal apparatus may set the second priority to 1. In this case, the threshold of the first RSRP may be a (1 + (the priority of the first data information - 1) × 8)^{th} threshold.

Based on the foregoing solution, the first terminal apparatus may determine the second priority based on the priority adjustment parameter and the first priority, and may determine, based on the second priority, the threshold of the first RSRP used for resource selection. When the available time-frequency resource is determined, a first time-frequency resource whose RSRP is higher than the threshold of the first RSRP is excluded from the first resource pool, so that a time-frequency resource that has great impact on LTE-V2X communication may be excluded as much as possible, thereby minimizing the impact on the LTE-V2X communication.

In a possible implementation, the first terminal apparatus may measure RSRP of the first time-frequency resource indicated in the first sidelink control information. The first terminal apparatus may receive a demodulation reference signal (demodulation reference signal, DMRS) in the first time-frequency resource indicated in the first sidelink control information, and perform RSRP measurement based on the DMRS. If the RSRP of the first time-frequency resource is higher than the threshold of the first RSRP, the first terminal apparatus may exclude the first time-frequency resource from the first resource pool.

It should be noted that the first time-frequency resource may include a plurality of periodically reserved time-frequency resources, and a periodicity is indicated in the first sidelink control information.

Refer to FIG. 6. A first time-frequency resource includes a plurality of periodically reserved time-frequency resources, and a periodicity is T1. RSRP of the first time-frequency resource indicated in first sidelink control information is higher than a threshold of first RSRP. A first terminal apparatus excludes the first time-frequency resource (a dashed area shown in FIG. 6) from a first resource pool. The first time-frequency resource includes a time-frequency resource in each T1 periodicity shown in FIG. 6.

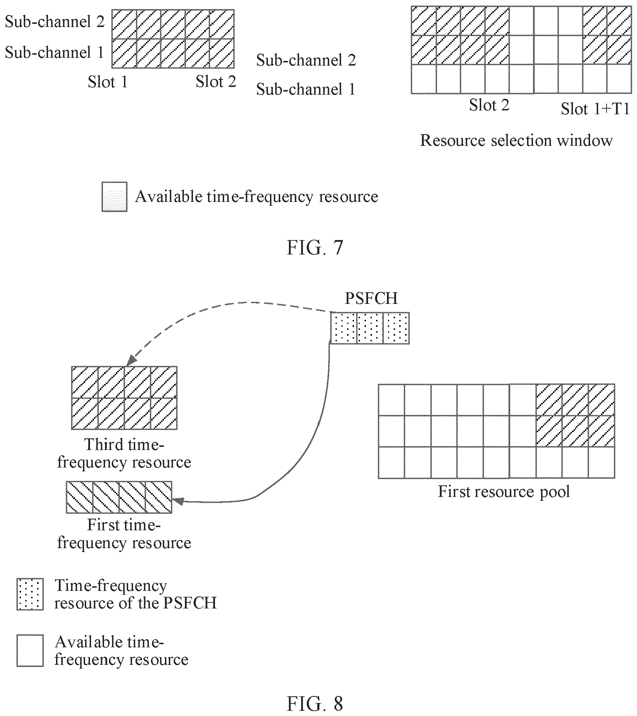

Refer to FIG. 7. A first time-frequency resource includes a plurality of periodically reserved time-frequency resources, and a periodicity is T1. RSRP of the first time-frequency resource indicated in first sidelink control information is higher than a threshold of first RSRP. A first terminal apparatus excludes, from a resource selection window, a time-frequency resource (a dashed area shown in FIG. 7) that is in the first time-frequency resource and that falls in each T1 periodicity in the resource selection window.

If the RSRP of the first time-frequency resource is no higher than the threshold of the first RSRP, the first terminal apparatus may not exclude the first time-frequency resource from a first resource pool.

Optionally, the first terminal apparatus may exclude a third time-frequency resource from the first resource pool. The third time-frequency resource does not belong to the first time-frequency resource, a time-frequency resource of a PSFCH corresponding to the third time-frequency resource belongs to the first time-frequency resource, and the RSRP of the first time-frequency resource is higher than the threshold of the first RSRP. If the RSRP of the first time-frequency resource is lower than or equal to the threshold of the first RSRP, a time-frequency resource of a PSFCH corresponding to the third time-frequency resource belongs to the first time-frequency resource, and the time-frequency resource of the PSFCH is occupied, the first terminal apparatus may not exclude the third time-frequency resource from the first resource pool.

Refer to FIG. 8. A third time-frequency resource does not belong to a first time-frequency resource, but a PSFCH resource corresponding to the third time-frequency resource belongs to the first time-frequency resource, and RSRP of the first time-frequency resource is higher than a threshold of first RSRP, in other words, the first time-frequency resource is occupied. In this case, if a first terminal apparatus sends sidelink information, for example, third sidelink control information and first data information, on the third time-frequency resource, feedback information of the first data information needs to be transmitted on a PSFCH. However, as shown in FIG. 8, the time-frequency resource of the PSFCH corresponding to the third time-frequency resource is occupied, and the first terminal apparatus cannot receive the feedback information on the PSFCH. Therefore, the first terminal apparatus needs to exclude, from a first resource pool, the third time-frequency resource on which the feedback resource is occupied. The feedback information may be a hybrid automatic repeat request (hybrid automatic repeat request, HARQ) acknowledgement (acknowledgement, ACK) or a HARQ non-acknowledgement (non-acknowledgement, NACK).

The time-frequency resource of the PSFCH may be a time-frequency resource used to send feedback information of data information on the first time-frequency resource. In other words, the time-frequency resource of the PSFCH has been occupied by an apparatus that supports an LTE-V2X communication function.

In an example, after the first terminal apparatus excludes the first time-frequency resource and the third time-frequency resource from the first resource pool based on the threshold of the first RSRP, if a ratio of a remaining time-frequency resource in the first resource pool to all time-frequency resources included in the first resource pool is less than a second preset value, the first terminal apparatus may re-determine the threshold of the first RSRP. The first terminal apparatus may re-determine a new threshold of the first RSRP based on the threshold of the first RSRP and a threshold adjustment parameter, and then determine, based on the new threshold of the first RSRP, whether to exclude the first time-frequency resource and the third time-frequency resource, until the ratio of the remaining time-frequency resource in the first resource pool to all time-frequency resources included in the first resource pool is no less than the second preset value. The threshold adjustment parameter and the second preset value may be pre-determined in a protocol, pre-configured, or configured by a network device.

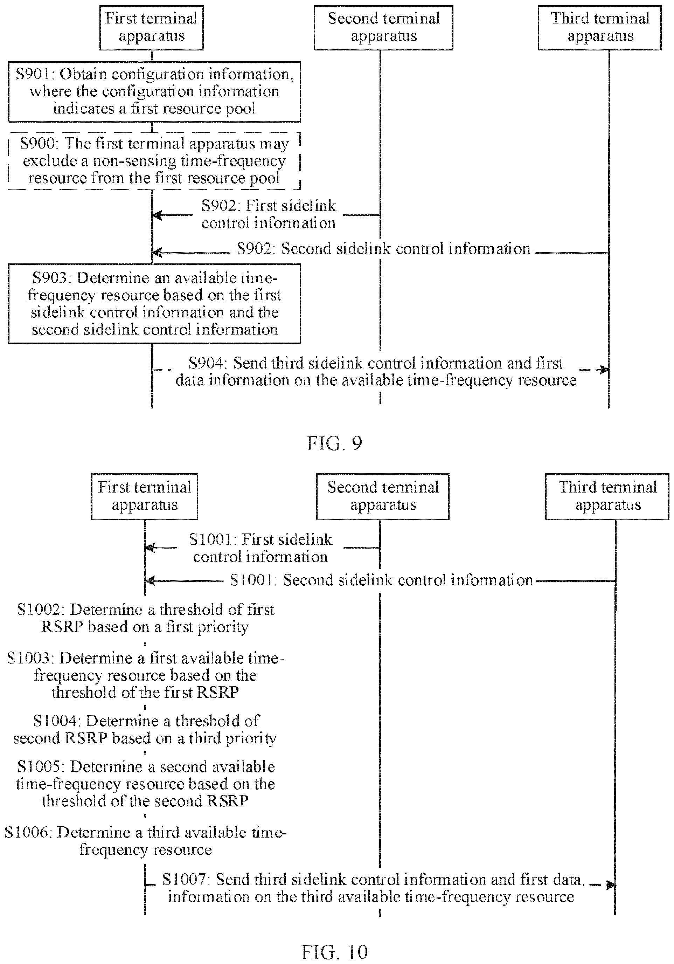

In this embodiment of this application, the first terminal apparatus may further determine an available time-frequency resource from the first resource pool based on first sidelink control information and second sidelink control information. FIG. 9 is an example flowchart of a resource determining method according to an embodiment of this application. The method may include the following operations. In the method embodiment shown in FIG. 3, the first terminal apparatus is an apparatus that supports an NR-V2X communication function. In a surrounding area of the first terminal apparatus, one or more apparatuses that support an LTE-V2X communication function are performing communication, such as a second terminal apparatus. The surrounding area of the first terminal apparatus further includes one or more apparatuses that support the NR-V2X communication function, such as a third terminal apparatus.

S901: The first terminal apparatus obtains configuration information, where the configuration information indicates a first resource pool.

For related descriptions of the first resource pool, refer to the method embodiment shown in FIG. 3. Details are not described herein again.

S902: The first terminal apparatus receives first sidelink control information and second sidelink control information.

For the first sidelink control information, refer to the method embodiment shown in FIG. 3. Details are not described herein again.

The second sidelink control information is control information used for NR radio access. To be specific, the second sidelink control information may be sideline control information from a terminal that supports an NR-V2X communication function, for example, a third terminal apparatus.

In an example, the first terminal apparatus may sense the first sidelink control information and the second sidelink control information via a sensing window. The sensing window may be configured by a network device or pre-configured. The first terminal apparatus may obtain sensing window configuration information, where the sensing window configuration information indicates a start slot and an end slot of the sensing window. In this case, a time domain resource in the sensing window may include all slots between the start slot and the end slot, and a frequency domain resource in the sensing window may include all sub-channels of the first resource pool. The first terminal apparatus may sense the first sidelink control information and the second sidelink control information via the sensing window.

Optionally, the first terminal apparatus may sense the first sidelink control information via a first sensing window, and sense the second sidelink control information via a second sensing window.

S903: The first terminal apparatus determines an available time-frequency resource based on the first sidelink control information and the second sidelink control information.

The available time-frequency resource herein is used by the first terminal apparatus to send first sidelink information. The first sidelink information includes third sidelink control information, or the first sidelink information includes first data information, or the first sidelink information includes third sidelink control information and first data information. For details, refer to related descriptions in the method embodiment shown in FIG. 3.

Optionally, the method further includes S904: The first terminal apparatus sends the third sidelink control information and the first data information on the available time-frequency resource.

It should be noted that the first terminal apparatus may send the third sidelink control information and the first data information to a terminal using the NR radio access, for example, the third terminal apparatus, or another terminal other than the third terminal apparatus.

Optionally, the configuration information further includes a first priority threshold. When priorities of the third sidelink control information and the first data information are higher than or equal to the first priority threshold, the first terminal apparatus may send the third sidelink control information and the first data information on the available time-frequency resource.

In an example, the first terminal apparatus may determine a resource selection window, and a start slot and an end slot of the resource selection window may be pre-configured. Time-frequency resources included in the resource selection window may be some or all of a plurality of time-frequency resources included in the first resource pool. A time domain resource in the resource selection window is all slots between the start slot and the end slot of the resource selection window, and a frequency domain resource in the resource selection window is all sub-channels of the first resource pool. In another example, the first terminal apparatus may determine the available time-frequency resource from the first resource pool.

Optionally, before S902, S900 may be further performed: The first terminal apparatus may exclude a non-sensing time-frequency resource from the first resource pool. In other words, the first terminal apparatus excludes, from the first resource pool, a time-frequency resource that does not sense the first sidelink control information or the second sidelink control information. The non-sensing time-frequency resource is used by the first terminal apparatus to send the third sidelink control information or fourth control information. The fourth control information is control information used for E-UTRAradio access, and the fourth control information may be sent to the network device or may be sent to another terminal, for example, the third terminal apparatus.

For a manner in which the first terminal apparatus excludes the non-sensing time-frequency resource, refer to related descriptions in the method embodiment shown in FIG. 3. It should be noted that, an occurrence time of S900 is not limited. S900 may be performed before S902, or S900 may be performed after S902, or S900 and S902 may be performed simultaneously.

Optionally, after the first terminal apparatus excludes the non-sensing time-frequency resource from the resource selection window, if a ratio of a remaining time-frequency resource in the resource selection window to all time-frequency resources in the resource selection window is less than or equal to a first preset value, the first terminal apparatus may re-determine the resource selection window and re-exclude the non-sensing time-frequency resource. For example, the first terminal apparatus may not exclude the non-sensing time-frequency resource used to send the control information used for the NR radio access, but exclude only a non-sensing time-frequency resource used to send the control information used for the E-UTRA radio access. Optionally, if a remaining time-frequency resource in the resource window still does not meet the foregoing condition, the first terminal apparatus may give up this resource selection and re-obtain the first sidelink control information and the second sidelink control information, or the first terminal apparatus may not exclude the non-sensing time-frequency resource used to send the control information used for the E-UTRA radio access.

In this embodiment of this application, the first terminal apparatus may further determine the available time-frequency resource from the first resource pool based on RSRP of a time-frequency resource indicated in the first sidelink control information and RSRP of a time-frequency resource indicated in the second sidelink control information. Specifically, the first sidelink control information includes a first priority. For a manner in which the first terminal apparatus excludes a first time-frequency resource based on the first sidelink control information, refer to related descriptions in the method embodiment shown in FIG. 3. Details are not described herein again.

In a possible implementation, the second sidelink control information includes a third priority P3. The first terminal apparatus may determine a threshold of second RSRP based on the third priority. The threshold of the second RSRP may be a (P3 + (a priority of to-be-sent data - 1) × 8)^{th} threshold in a pre-configured priority set. The first terminal apparatus may receive a DMRS in a second time-frequency resource indicated in the second sidelink control information, and perform RSRP measurement based on the DMRS. If the RSRP is higher than the threshold of the second RSRP, the first terminal apparatus may exclude the second time-frequency resource from a second resource pool.

It should be noted that the second time-frequency resource may include a plurality of periodically reserved time-frequency resources, and a periodicity is indicated in the second sidelink control information.

Refer to FIG. 6. The second time-frequency resource includes a plurality of periodically reserved time-frequency resources, and the periodicity is T1. The RSRP of the second time-frequency resource indicated in the second sidelink control information is higher than the threshold of the second RSRP. The first terminal apparatus excludes the second time-frequency resource (a dashed area shown in FIG. 6) from the first resource pool. The second time-frequency resource includes a time-frequency resource in each T1 periodicity shown in FIG. 6.

Refer to FIG. 7. The second time-frequency resource includes a plurality of periodically reserved time-frequency resources, and the periodicity is T1. The RSRP of the second time-frequency resource indicated in the second sidelink control information is higher than the threshold of the second RSRP. The first terminal apparatus excludes, from the resource selection window, a time-frequency resource that is in the second time-frequency resource and that falls in each T2 periodicity in the resource selection window (a dashed area shown in FIG. 7).

If the RSRP of the second time-frequency resource is no higher than the threshold of the second RSRP, the first terminal apparatus may not exclude the second time-frequency resource from the first resource pool.

Based on the foregoing solution, the first terminal apparatus may exclude, from the first resource pool, the first time-frequency resource whose RSRP is higher than a threshold of first RSRP and the second time-frequency resource whose RSRP is higher than the threshold of the second RSRP. When determining the available time-frequency resource, the first terminal apparatus excludes, as much as possible, a time-frequency resource that has great impact on LTE-V2X communication and NR-V2X communication.

Optionally, the first terminal apparatus may exclude a third time-frequency resource from the first resource pool. For a method in which the first terminal apparatus excludes the third time-frequency resource, refer to related descriptions in the method embodiment shown in FIG. 3. Details are not described herein again.

Optionally, the first terminal apparatus may exclude a fourth time-frequency resource from the first resource pool. The fourth time-frequency resource does not belong to the second time-frequency resource, a time-frequency resource of a PSFCH corresponding to the fourth time-frequency resource belongs to the second time-frequency resource, and the RSRP of the second time-frequency resource is higher than the threshold of the second RSRP. If the first terminal apparatus sends the third sidelink control information and the first data information on the fourth time-frequency resource, feedback information of the first data information may be transmitted on the PSFCH. However, if the time-frequency resource of the PSFCH is occupied, the first terminal apparatus cannot receive the feedback information on the PSFCH. Therefore, the first terminal apparatus may exclude, from the first resource pool, the fourth time-frequency resource on which the time-frequency resource of the PSFCH is occupied.

The time-frequency resource of the PSFCH may be a time-frequency resource used to send feedback information of data information on the second time-frequency resource. In other words, the time-frequency resource of the PSFCH has been occupied by the apparatus that supports the NR-V2X communication function.

In an example, after the first terminal apparatus excludes some or all of the first time-frequency resource, the second time-frequency resource, or the third time-frequency resource from the first resource pool based on the threshold of the first RSRP and the threshold of the second RSRP, if a ratio of a remaining time-frequency resource in the first resource pool to all time-frequency resources included in the first resource pool is less than a second preset value, the first terminal apparatus may re-determine the threshold of the first RSRP. The first terminal apparatus may re-determine a new threshold of the first RSRP based on the threshold of the first RSRP and a threshold adj ustment parameter, and then determine, based on the new threshold of the first RSRP, whether to exclude the first time-frequency resource and the third time-frequency resource, until the ratio of the remaining time-frequency resource in the first resource pool to all time-frequency resources included in the first resource pool is no less than the second preset value. The threshold adjustment parameter and the second preset value may be pre-determined in a protocol, pre-configured, or configured by a network device.

An embodiment of this application further provides another resource determining method. Refer to FIG. 10. The method may include the following operations.

S1001: A first terminal apparatus obtains first sidelink control information and second sidelink control information.

For related descriptions of the first sidelink control information and the second sidelink control information, refer to the method embodiment shown in FIG. 3. Details are not described herein again.

S1002: The first terminal apparatus determines a threshold of first RSRP based on a first priority.

The first sidelink control information includes the first priority. Assuming that the first priority is P1, the threshold of the first RSRP is a (P1 + (a priority of first data information - 1) × 8)^{th} threshold in a pre-configured threshold set.

S1003: The first terminal apparatus determines a first available time-frequency resource based on the threshold of the first RSRP.

The first terminal apparatus may measure RSRP of a first time-frequency resource indicated in the first sidelink control information. If the RSRP of the first time-frequency resource is higher than the threshold of the first RSRP, the first terminal apparatus may exclude the first time-frequency resource from a first resource pool. It should be noted that the first time-frequency resource may be a periodic resource, and a periodicity of the first time-frequency resource may be indicated in the first sidelink control information. In this case, the first terminal apparatus needs to exclude first time-frequency resources in all periodicities from the first resource pool.

If the RSRP of the first time-frequency resource is no higher than the threshold of the first RSRP, the first available time-frequency resource may be a first resource pool.

Optionally, the first terminal apparatus may determine, in an LTE-V2X resource pool based on the threshold of the first RSRP, whether to exclude the first time-frequency resource.

Optionally, the first terminal apparatus may further exclude a non-sensing time-frequency resource from the first resource pool. For related descriptions, refer to related descriptions in the method embodiment shown in FIG. 3.

S1004: The first terminal apparatus determines a threshold of second RSRP based on a third priority.

For a manner in which the first terminal apparatus determines the threshold of the second RSRP based on the third priority, refer to related descriptions in the method embodiment shown in FIG. 3. Details are not described herein again.

51005: The first terminal apparatus determines a second available time-frequency resource based on the threshold of the second RSRP.

The first terminal apparatus may measure RSRP of the second time-frequency resource indicated in the second sidelink control information. If the RSRP of the second time-frequency resource is higher than the threshold of the second RSRP, the first terminal apparatus may exclude the second time-frequency resource from the first resource pool. It should be noted that the second time-frequency resource may be a periodic resource, and a periodicity of the second time-frequency resource may be indicated in the second sidelink control information. In this case, the first terminal apparatus needs to exclude second time-frequency resources in all periodicities from the first resource pool.

If the RSRP of the second time-frequency resource is no higher than the threshold of the second RSRP, the second available time-frequency resource may be the first resource pool.

Optionally, the first terminal apparatus may determine, in an NR-V2X resource pool based on the threshold of the second RSRP, whether to exclude the second time-frequency resource.

Optionally, the first terminal apparatus may further exclude the non-sensing time-frequency resource from the first resource pool. For related descriptions, refer to related descriptions in the method embodiment shown in FIG. 3.

S1006: The first terminal apparatus determines a third available time-frequency resource.

The third available time-frequency resource herein is an intersection of the first available time-frequency resource and the second available time-frequency resource. The third available time-frequency resource is used to send third sidelink control information and the first data information.

Optionally, the method further includes S1007: The first terminal apparatus sends the third sidelink control information and the first data information on the available time-frequency resource.

It should be noted that the first terminal apparatus may send the third sidelink control information and the first data information to a terminal using NR radio access, for example, a third terminal apparatus, or another terminal other than the third terminal apparatus.

In an example, if the first terminal apparatus determines the first available time-frequency resource in the LTE-V2X resource pool, and determines the second available time-frequency resource in the NR-V2X resource pool, the third available time-frequency resource may be an intersection of the first available time-frequency resource, the second available time-frequency resource, and a resource pool shared by LTE-V2X and NR-V2X.

In this embodiment of this application, the first terminal apparatus may include an NR-V2X communication module and an LTE-V2X communication module. The LTE-V2X communication module may receive the first sidelink control information, and parse the first sidelink control information to obtain information needed for resource selection, for example, the RSRP of the first time-frequency resource. The NR-V2X communication module may be configured to receive the second sidelink control information, and parse the second sidelink control information to obtain information required for resource selection, for example, the RSRP of the second time-frequency resource.

In an example, the LTE-V2X communication module may send, to the NR-V2X communication module, the obtained information required for resource selection, and the NR-V2X communication module determines an available time-frequency resource in the first resource pool. In another example, the LTE-V2X communication module may determine the first available time-frequency resource from the first resource pool based on the obtained information required for resource selection, and send the first available time-frequency resource to the NR-V2X communication module. The NR-V2X communication module determines the second available time-frequency resource from the first resource pool based on the obtained information required for resource selection, and determines the third available time-frequency resource based on the first available time-frequency resource and the second available time-frequency resource.

The following describes the NR-V2X communication module and the LTE-V2X communication module that are of the first terminal apparatus.

The NR-V2X communication module may be divided into an NR-V2X media access control (media access control, MAC) layer and an NR-V2X physical (physical, PHY) layer. The LTE-V2X communication module may be divided into an LTE-V2X MAC layer and an LTE-V2X PHY layer.

The NR-V2X communication module and the LTE-V2X communication module have the following four possible information exchange structures.

### Structure 1:

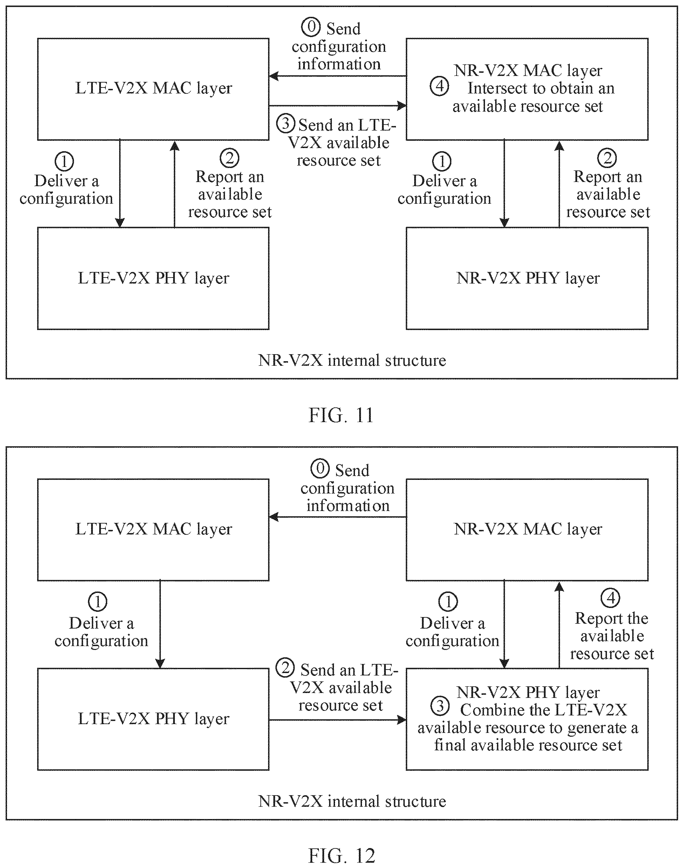

Refer to FIG. 11. The NR-V2X MAC layer sends related configuration information to the LTE-V2X MAC layer. The related configuration information may include at least one of the following information: a sensing information sending mode, sensing window configuration information, and a sensing window cache size. The sensing information sending mode is a slot and frequency mode in which the information that is required for resource selection and that is obtained by the LTE-V2X communication module based on the first sidelink control information is sent to the NR-V2X communication module. For example, each time the LTE-V2X communication module obtains sensing information, the LTE-V2X communication module immediately sends the sensing information to the NR-V2X module. For another example, after obtaining sensing information, the LTE-V2X communication module first locally stores the sensing information, and after receiving a notification from the NR-V2X communication module, sends the sensing information to the NR-V2X communication module based on a slot specified in the sensing window configuration information. For another example, after obtaining sensing information, the LTE-V2X communication module first locally stores the sensing information, and then sends the stored sensing information to the NR-V2X communication module after an amount of the stored sensing information reaches a configured sensing window cache size.

The NR-V2X MAC layer sends the related configuration information to the LTE-V2X MAC layer. The LTE-V2X MAC layer sends a configuration indicated in the related configuration information to the LTE-V2X PHY layer. The NR-V2X MAC layer sends the configuration indicated in the related configuration information to the NR-V2X PHY layer. The LTE-V2X PHY layer and the NR-V2X PHY layer separately perform resource selection. The LTE-V2X PHY layer reports the first available time-frequency resource to the LTE-V2X MAC layer. The NR-V2X PHY layer reports the second available time-frequency resource to the NR-V2X MAC layer. The LTE-V2X MAC layer sends the first available time-frequency resource to the NR-V2X MAC layer. The NR-V2X MAC intersects of the first available time-frequency resource and the second available time-frequency resource, to obtain the third available time-frequency resource shared by the LTE-V2X and the NR-V2X. It should be noted that sequence numbers marked in the figure do not represent a strict time sequence between steps. In practice, some steps may be properly omitted or combined with another step. The sequence numbers marked in the figure are intended only to describe the steps.

### Structure 2:

Refer to FIG. 12. The NR-V2X MAC layer sends related configuration information to the LTE-V2X MAC layer. The LTE-V2X MAC layer sends a configuration indicated in the related configuration information to the LTE-V2X PHY layer. The NR-V2X MAC layer sends the configuration indicated in the related configuration information to the NR-V2X PHY layer. The LTE-V2X PHY layer and the NR-V2X PHY layer separately perform resource selection. The LTE-V2X PHY layer sends the first available time-frequency resource to the NR-V2X PHY layer. The NR-V2X PHY layer intersects the first available time-frequency resource and the second available time-frequency resource, to obtain the third available time-frequency resource. The NR-V2X PHY layer sends the third available time-frequency resource to the NR-V2X MAC layer.

### Structure 3:

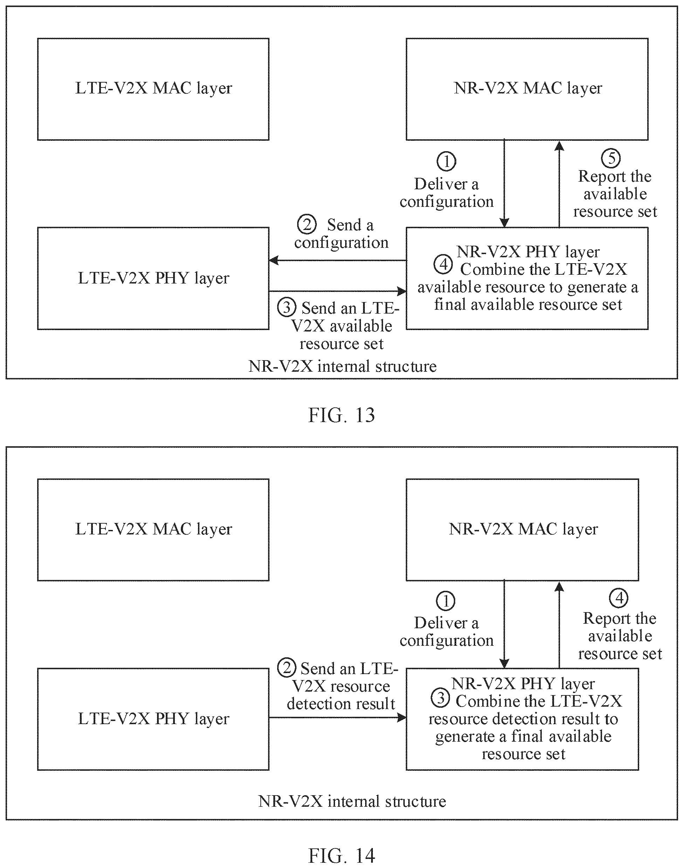

Refer to FIG. 13. The NR-V2X MAC layer sends related configuration information to the NR-V2X PHY layer. The NR-V2X PHY layer sends the related configuration information to the LTE-V2X PHY layer. The LTE-V2X PHY layer and the NR-V2X PHY layer separately perform resource selection. The LTE-V2X PHY layer sends the first available time-frequency resource to the NR-V2X PHY layer. The NR-V2X PHY layer obtains the intersection of the first available time-frequency resource and the second available time-frequency resource, to obtain the third available time-frequency resource. The NR-V2X PHY layer sends the third available time-frequency resource to the NR-V2X MAC layer.

### Structure 4:

Refer to FIG. 14. The NR-V2X MAC layer sends related configuration information to the NR-V2X PHY layer. The LTE-V2X PHY layer and the NR-V2X PHY layer separately perform resource detection. The LTE-V2X PHY layer sends a resource detection result of each slot to the NR-V2X PHY layer. The NR-V2X PHY layer performs the resource detection based on the received resource detection result of each slot of the LTE-V2X and a resource detection result of the NR-V2X PHY layer, to obtain an available time-frequency resource. The NR-V2X PHY layer sends the available time-frequency resource to the NR-V2X MAC layer.

It may be understood that to implement functions in the foregoing embodiments, the base station and the terminal include corresponding hardware structures and/or software modules for performing various functions. A person skilled in the art should be easily aware that, in combination with the units and the method steps in the examples described in embodiments disclosed in this application, this application can be implemented by using hardware or a combination of hardware and computer software. Whether a function is performed through hardware or hardware driven by computer software depends on particular application scenarios and design constraint conditions of the technical solutions.

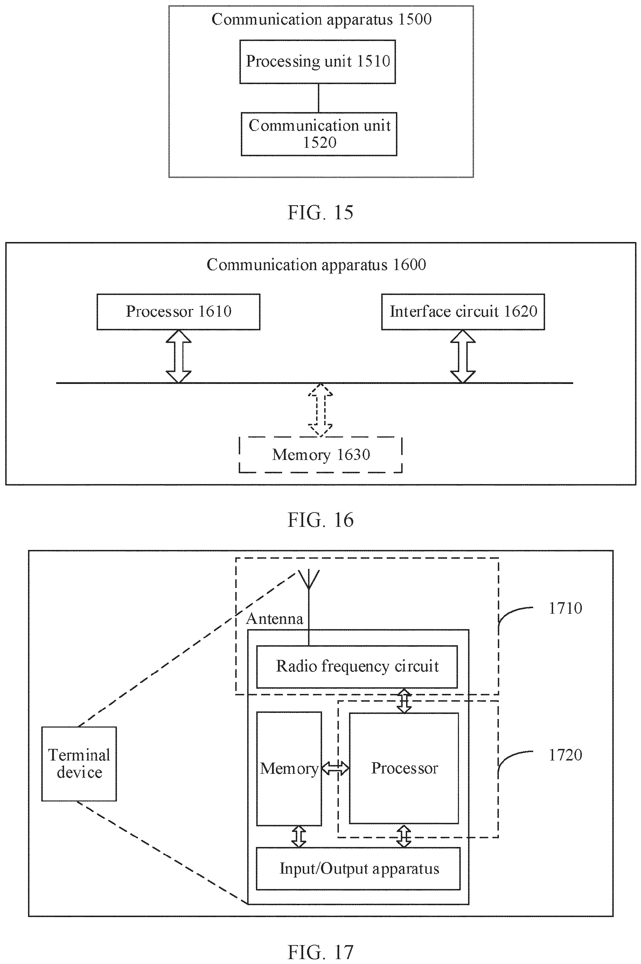

FIG. 15 to FIG. 17 are schematic diagrams of possible structures of communication apparatuses according to embodiments of this application. These communication apparatuses may be configured to implement a function of the first terminal in the foregoing method embodiments, and therefore can also implement beneficial effects of the foregoing method embodiments. In embodiments of this application, the communication apparatus may be either the terminal 201 or the terminal 201 shown in FIG. 2, or may be a module (for example, a chip) used in a terminal.

As shown in FIG. 15, a communication apparatus 1500 includes a processing unit 1510 and a communication unit 1520. The communication apparatus 1500 is configured to implement a function of the terminal in the method embodiment shown in FIG. 3 or FIG. 9.

When the communication apparatus 1500 is configured to implement the function of the terminal in the method embodiment shown in FIG. 3, the communication unit 1520 is configured to obtain configuration information and first sidelink control information. The processing unit 1510 is configured to determine an available time-frequency resource based on the first sidelink control information. Optionally, the communication unit 1520 is further configured to send third sidelink control information and first data information on the available time-frequency resource.

In a design, the first sidelink control information indicates a first time-frequency resource, and the first sidelink control information includes a first priority. The processing unit 1510 is further configured to: determine a second priority based on the first priority and a priority adjustment parameter, where the second priority is higher than or equal to the first priority; determine a threshold of first RSRP based on the second priority; and exclude the first time-frequency resource from a first resource pool when an RSRP value of the first time-frequency resource is higher than the threshold of the first RSRP. A resource that remains after the first time-frequency resource is excluded from the first resource pool is the available time-frequency resource.

In a design, the processing unit 1510 is further configured to: exclude a non-sensing time-frequency resource from the first resource pool to obtain a second resource pool; and determine the available time-frequency resource from the second resource pool based on the first sidelink control information.

In a design, the processing unit 1510 is further configured to exclude the first time-frequency resource and a third time-frequency resource from the first resource pool to obtain the available time-frequency resource. The third time-frequency resource does not belong to the first time-frequency resource, a time-frequency resource of a PSFCH corresponding to the third time-frequency resource belongs to the first time-frequency resource, and the RSRP value of the first time-frequency resource is higher than the threshold of the first RSRP.

When the communication apparatus 1500 is configured to implement the function of the terminal in the method embodiment shown in FIG. 9, the communication unit 1520 is configured to obtain configuration information, first sidelink control information, and second sidelink control information. The processing unit 1510 is configured to determine an available time-frequency resource based on the first sidelink control information and the second sidelink control information. Optionally, the communication unit 1520 is further configured to send third sidelink control information and first data information on the available time-frequency resource.

In a design, when determining the available time-frequency resource from a first resource pool based on the first sidelink control information and the second sidelink control information, the processing unit 1510 is specifically configured to: the first sidelink control information indicates a first time-frequency resource, where the first sidelink control information includes a first priority; determine a second priority based on the first priority and a priority adjustment parameter, where the second priority is higher than or equal to the first priority; determine a threshold of first RSRP based on the second priority; exclude the first time-frequency resource from the first resource pool when an RSRP value of the first time-frequency resource is higher than the threshold of the first RSRP; the second sidelink control information indicates a second time-frequency resource, where the second sidelink control information includes a third priority; determine a threshold of second RSRP based on the third priority; and exclude the second time-frequency resource from the first resource pool when an RSRP value of the second time-frequency resource is higher than the threshold of the second RSRP, where a resource that remains after the first time-frequency resource and/or the second time-frequency resource are/is excluded from the first resource pool is the available time-frequency resource.

In a design, the processing unit 1510 is further configured to exclude a non-sensing time-frequency resource from the first resource pool to obtain a second resource pool. When determining the available time-frequency resource from the first resource pool based on the first sidelink control information and the second sidelink control information, the processing unit 1510 is specifically configured to determine the available time-frequency resource from the second resource pool based on the first sidelink control information and the second sidelink control information.

In a design, the processing unit 1510 is further configured to: exclude the first time-frequency resource and a third time-frequency resource from the first resource pool to obtain the available time-frequency resource; or exclude the second time-frequency resource and a fourth time-frequency resource from the first resource pool to obtain the available time-frequency resource; or exclude the first time-frequency resource, the second time-frequency resource, a third time-frequency resource, and a fourth time-frequency resource from the first resource pool to obtain the available time-frequency resource. The third time-frequency resource does not belong to the first time-frequency resource, a time-frequency resource of a physical sidelink feedback channel PSFCH corresponding to the third time-frequency resource belongs to the first time-frequency resource, the RSRP value of the first time-frequency resource is higher than the threshold of the first RSRP, a time-frequency resource of a physical sidelink feedback channel PSFCH corresponding to the fourth time-frequency resource belongs to the second time-frequency resource, and the RSRP value of the second time-frequency resource is higher than the threshold of the second RSRP.

When the communication apparatus 1500 is configured to implement a function of the terminal in the method embodiment shown in FIG. 10, the communication unit 1520 is configured to obtain first sidelink control information and second sidelink control information, where the first sidelink control information includes a first priority, and the second sidelink control information includes a third priority. The processing unit 1510 is configured to determine a threshold of first RSRP based on the first priority, and determine a first available time-frequency resource based on the threshold of the first RSRP. The processing unit 1510 is further configured to determine a threshold of the second RSRP based on the third priority, and determine an available time-frequency resource based on the threshold of the second RSRP. The processing unit 1510 is further configured to determine a third available time-frequency resource. Optionally, the communication unit 1520 is further configured to send third sidelink control information and first data information on the third available time-frequency resource.

In a design, when determining the first available time-frequency resource based on the threshold of the first RSRP, the processing unit 1510 is specifically configured to: the first sidelink control information indicates a first time-frequency resource; exclude the first time-frequency resource from a first resource pool when RSRP of the first time-frequency resource is higher than the threshold of the first RSRP, to obtain the first available time-frequency resource, where the first resource pool includes a plurality of time-frequency resources. When the RSRP of the first time-frequency resource is lower than the threshold of the first RSRP, the first available time-frequency resource is the first resource pool.

In a design, when determining the second available time-frequency resource based on the threshold of the second RSRP, the processing unit 1510 is specifically configured to: the second sidelink control information indicates a second time-frequency resource; exclude the second time-frequency resource from the first resource pool when RSRP of the second time-frequency resource is higher than the threshold of the second RSRP, to obtain the second available time-frequency resource, where the first resource pool includes a plurality of time-frequency resources. When the RSRP of the second time-frequency resource is lower than the threshold of the second RSRP, the second available time-frequency resource is the first resource pool.

For more detailed descriptions of the processing unit 1510 and the communication unit 1520, directly refer to related descriptions in the method embodiments shown in FIG. 3 to FIG. 10.

As shown in FIG. 16, a communication apparatus 1600 includes a processor 1610 and an interface circuit 1620. The processor 1610 and the interface circuit 1620 are coupled to each other. It may be understood that the interface circuit 1620 may be a transceiver or an input/output interface. Optionally, the communication apparatus 1600 may further include a memory 1630, configured to: store instructions executed by the processor 1610, store input data required by the processor 1610 to run the instructions, or store data generated after the processor 1610 runs the instructions.

When the communication apparatus 1600 is configured to implement the method shown in FIG. 3 or FIG. 9, the processor 1610 is configured to implement functions of the processing unit 1510, and the interface circuit 1620 is configured to implement functions of the communication unit 1520.

When the foregoing communication apparatus is a chip used in a terminal, the terminal chip implements a function of the terminal in the foregoing method embodiment. The terminal chip receives information from another module (for example, a radio frequency module or an antenna) in the terminal, where the information is sent by a base station to the terminal; or the terminal chip sends information to another module (for example, a radio frequency module or an antenna) in the terminal, where the information is sent by the terminal to a base station.

FIG. 17 is a simplified schematic diagram of a structure of a terminal device. For ease of understanding and illustration, an example in which the terminal device is a mobile phone is used in FIG. 17. As shown in FIG. 17, the terminal device includes a processor, a memory, a radio frequency circuit, an antenna, and an input/output apparatus. The processor is mainly configured to process a communication protocol and communication data, control an on-board unit, execute a software program, process data of the software program, and the like. The memory is mainly configured to store the software program and data. The radio frequency circuit is mainly configured to perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of devices may have no input/output apparatus.

When needing to send data, after performing baseband processing on to-be-sent data, the processor outputs a baseband signal to the radio frequency circuit. The radio frequency circuit performs radio frequency processing on the baseband signal and then sends the radio frequency signal to the outside in a form of an electromagnetic wave through the antenna. When data is sent to the device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 17 shows only one memory and one processor. In an actual device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a transceiver unit of the apparatus, and the processor having a processing function may be considered as a processing unit of the apparatus. As shown in FIG. 17, the apparatus includes a transceiver unit 1710 and a processing unit 1720. The transceiver unit 1710 may also be referred to as a transceiver, a transceiver machine, a transceiver apparatus, or the like. The processing unit 1720 may also be referred to as a processor, a processing board, a processing module, a processing apparatus, or the like. Optionally, a component that is in the transceiver unit 1710 and that is configured to implement a receiving function may be considered as a receiving unit, and a component that is in the transceiver unit 1710 and that is configured to implement a sending function may be considered as a sending unit. In other words, the transceiver unit 1710 includes the receiving unit and the sending unit. The transceiver unit 1710 sometimes may also be referred to as a transceiver machine, a transceiver, a transceiver circuit, or the like. The receiving unit sometimes may also be referred to as a receiving machine, a receiver, a receiving circuit, or the like. The sending unit sometimes may also be referred to as a transmitting machine, a transmitter, a transmitting circuit, or the like.

It should be understood that the transceiver unit 1710 is configured to perform sending and receiving operations of the first terminal apparatus in the foregoing method embodiments, and the processing unit 1720 is configured to perform an operation other than the receiving and sending operations of the first terminal apparatus in the foregoing method embodiments.

For example, in an implementation, the transceiver unit 1710 may be configured to perform the receiving and sending operations performed by the first terminal apparatus in the embodiment shown in FIG. 3, FIG. 9, or FIG. 10, and/or support another process of the technology described in this specification. The processing unit 1720 may be configured to perform all operations performed by the first terminal apparatus other than the receiving and sending operations in the embodiment shown in FIG. 3, FIG. 9, or FIG. 10, and/or support another process of the technology described in this specification.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, any regular processor, or the like.

The method steps in embodiments of this application may be implemented by hardware, or may be implemented by a processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in the base station or the terminal as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, all or some of the processes or functions in embodiments of this application are executed. The computer may be a general-purpose computer, a dedicated computer, a computer network, a network device, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and represents that three relationships may exist. For example, A and/or B may represent the following three cases: Only A exists, both A and B exist, and only B exists, where A and B may be singular or plural. In the text descriptions of this application, the character "/" generally represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. The sequence numbers of the foregoing processes do not mean execution sequences. The execution sequences of the processes should be determined based on functions and internal logic of the processes.

## Claims

1. A resource determining method, comprising:
obtaining configuration information, wherein the configuration information indicates a first resource pool, and the first resource pool comprises a plurality of time-frequency resources;
receiving first sidelink control information and second sidelink control information, wherein the first sidelink control information is control information used for evolved universal terrestrial radio access E-UTRA radio access, and the second sidelink control information is control information used for new radio NR radio access; and
determining an available time-frequency resource from the first resource pool based on the first sidelink control information and the second sidelink control information, wherein the available time-frequency resource is used to send third sidelink control information and first data information, the third sidelink control information is the control information used for the NR radio access, and the first data information is data information used for the NR radio access.

2. The method according to claim 1, wherein the determining an available time-frequency resource from the first resource pool based on the first sidelink control information and the second sidelink control information comprises:
the first sidelink control information indicates a first time-frequency resource, wherein the first sidelink control information comprises a first priority; determining a second priority based on the first priority and a priority adjustment parameter, wherein the second priority is higher than or equal to the first priority;
determining a threshold of first reference signal power RSRP based on the second priority;
excluding the first time-frequency resource from the first resource pool when an RSRP value of the first time-frequency resource is higher than the threshold of the first RSRP;
the second sidelink control information indicates a second time-frequency resource, wherein the second sidelink control information comprises a third priority;
determining a threshold of second RSRP based on the third priority; and
excluding the second time-frequency resource from the first resource pool when an RSRP value of the second time-frequency resource is higher than the threshold of the second RSRP, wherein
a resource that remains after the first time-frequency resource and/or the second time-frequency resource are/is excluded from the first resource pool is the available time-frequency resource.

3. The method according to claim 1, wherein the method further comprises:
excluding a non-sensing time-frequency resource from the first resource pool to obtain a second resource pool; and
the determining an available time-frequency resource from the first resource pool based on the first sidelink control information and the second sidelink control information comprises:
determining the available time-frequency resource from the second resource pool based on the first sidelink control information and the second sidelink control information.

4. The method according to any one of claims 1 to 3, wherein
the first time-frequency resource comprises a plurality of periodically reserved time-frequency resources; and
the second time-frequency resource comprises a plurality of periodically reserved time-frequency resources.

5. The method according to any one of claims 2 to 4, wherein
that a resource that remains after the first time-frequency resource and/or the second time-frequency resource are/is excluded from the first resource pool is the available time-frequency resource comprises:
excluding the first time-frequency resource and a third time-frequency resource from the first resource pool to obtain the available time-frequency resource;
excluding the second time-frequency resource and a fourth time-frequency resource from the first resource pool to obtain the available time-frequency resource; or
excluding the first time-frequency resource, the second time-frequency resource, a third time-frequency resource, and a fourth time-frequency resource from the first resource pool to obtain the available time-frequency resource, wherein
the third time-frequency resource does not belong to the first time-frequency resource, a time-frequency resource of a physical sidelink feedback channel PSFCH corresponding to the third time-frequency resource belongs to the first time-frequency resource, the RSRP value of the first time-frequency resource is higher than the threshold of the first RSRP, a time-frequency resource of a physical sidelink feedback channel PSFCH corresponding to the fourth time-frequency resource belongs to the second time-frequency resource, and the RSRP value of the second time-frequency resource is higher than the threshold of the second RSRP.

6. The method according to any one of claims 1 to 5, wherein the configuration information further indicates that the first resource pool comprises a time-frequency resource used to send sidelink information of the E-UTRA radio access and a time-frequency resource used to send sidelink information of the new radio NR radio access.

7. The method according to any one of claims 1 to 6, wherein the configuration information further indicates a first priority threshold, and that the available time-frequency resource is used to send third sidelink control information and first data information comprises:
when priorities of the third sidelink control information and the first data information are higher than or equal to the first priority threshold, the available time-frequency resource is used to send the third sidelink control information and the first data information.

8. A resource determining method, comprising:
receiving, by a first terminal apparatus, first sidelink control information and second sidelink control information, wherein the first sidelink control information is control information used for evolved universal terrestrial radio access E-UTRA radio access, and the second sidelink control information is control information used for new radio NR radio access; and
determining, by the first terminal apparatus, a third available time-frequency resource based on the first sidelink control information and the second sidelink control information, wherein the third available time-frequency resource is used to send third sidelink control information and first data information, the third sidelink control information is the control information used for the NR radio access, and the first data information is data information used for the NR radio access.

9. The method according to claim 8, wherein the determining, by the first terminal apparatus, a third available time-frequency resource based on the first sidelink control information and the second sidelink control information comprises:
determining, by the first terminal apparatus, a first available time-frequency resource based on the first sidelink control information;
determining, by the first terminal apparatus, a second available time-frequency resource based on the second sidelink control information; and
determining, by the first terminal apparatus, the third available time-frequency resource based on the first available time-frequency resource and the second available time-frequency resource.

10. The method according to claim 9, wherein the third available time-frequency resource is an intersection of the first available time-frequency resource and the second available time-frequency resource.

11. The method according to claim 8, wherein the first terminal apparatus comprises a first module and a second module, the first module supports E-UTRA-based communication, the second module supports NR-based communication, the first module comprises a first physical layer, and the second module comprises a second physical layer.

12. The method according to claim 11, wherein the determining, by the first terminal apparatus, a third available time-frequency resource based on the first sidelink control information and the second sidelink control information comprises:
determining, by the first module of the first terminal apparatus, a first resource detection result based on the first sidelink control information;
determining, by the second module of the first terminal apparatus, a second resource detection result based on the second sidelink control information; and
determining, by the second physical layer of the first terminal apparatus, the third available time-frequency resource based on the first resource detection result and the second resource detection result, wherein the first resource detection result is from the first physical layer.

13. The method according to claim 12, wherein the first resource detection result comprises a resource detection result of at least one slot in a sensing window, and the second resource detection result comprises the resource detection result of the at least one slot in the sensing window.

14. The method according to claim 12, wherein the second module further comprises a media access control layer, and the method further comprises:
sending, by the second physical layer of the first terminal apparatus, the third available time-frequency resource to the media access control layer.

15. A communication apparatus, comprising a processing unit and a communication unit, wherein
the communication unit is configured to obtain configuration information, wherein the configuration information indicates a first resource pool, and the first resource pool comprises a plurality of time-frequency resources;
the communication unit is further configured to receive first sidelink control information and second sidelink control information, wherein the first sidelink control information is control information used for evolved universal terrestrial radio access E-UTRA radio access, and the second sidelink control information is control information used for new radio NR radio access; and
the processing unit is configured to determine an available time-frequency resource from the first resource pool based on the first sidelink control information and the second sidelink control information, wherein the available time-frequency resource is used to send third sidelink control information and first data information, the third sidelink control information is the control information used for the NR radio access, and the first data information is data information used for the NR radio access.

16. The apparatus according to claim 15, wherein when determining the available time-frequency resource from the first resource pool based on the first sidelink control information and the second sidelink control information, the processing unit is specifically configured to:
the first sidelink control information indicates a first time-frequency resource, wherein the first sidelink control information comprises a first priority; determine a second priority based on the first priority and a priority adjustment parameter, wherein the second priority is higher than or equal to the first priority;
determine a threshold of first reference signal power RSRP based on the second priority;
exclude the first time-frequency resource from the first resource pool when an RSRP value of the first time-frequency resource is higher than the threshold of the first RSRP;
the second sidelink control information indicates a second time-frequency resource, wherein the second sidelink control information comprises a third priority;
determine a threshold of second RSRP based on the third priority; and
exclude the second time-frequency resource from the first resource pool when an RSRP value of the second time-frequency resource is higher than the threshold of the second RSRP, wherein
a resource that remains after the first time-frequency resource and/or the second time-frequency resource are/is excluded from the first resource pool is the available time-frequency resource.

17. The apparatus according to claim 15 or 16, wherein the processing unit is further configured to:
exclude a non-sensing time-frequency resource from the first resource pool to obtain a second resource pool; and
when determining the available time-frequency resource from the first resource pool based on the first sidelink control information and the second sidelink control information, the processing unit is specifically configured to:
determine the available time-frequency resource from the second resource pool based on the first sidelink control information and the second sidelink control information.

18. The apparatus according to any one of claims 15 to 17, wherein
the first time-frequency resource comprises a plurality of periodically reserved time-frequency resources; and
the second time-frequency resource comprises a plurality of periodically reserved time-frequency resources.

19. The apparatus according to any one of claims 16 to 18, wherein the processing unit is further configured to:
exclude the first time-frequency resource and a third time-frequency resource from the first resource pool to obtain the available time-frequency resource;
exclude the second time-frequency resource and a fourth time-frequency resource from the first resource pool to obtain the available time-frequency resource; or
exclude the first time-frequency resource, the second time-frequency resource, a third time-frequency resource, and a fourth time-frequency resource from the first resource pool to obtain the available time-frequency resource, wherein
the third time-frequency resource does not belong to the first time-frequency resource, a time-frequency resource of a physical sidelink feedback channel PSFCH corresponding to the third time-frequency resource belongs to the first time-frequency resource, the RSRP value of the first time-frequency resource is higher than the threshold of the first RSRP, a time-frequency resource of a physical sidelink feedback channel PSFCH corresponding to the fourth time-frequency resource belongs to the second time-frequency resource, and the RSRP value of the second time-frequency resource is higher than the threshold of the second RSRP.

20. The apparatus according to any one of claims 15 to 19, wherein the configuration information further indicates that the first resource pool comprises a time-frequency resource used to send sidelink information of the E-UTRA radio access and a time-frequency resource used to send sidelink information of the new radio NR radio access.

21. The apparatus according to any one of claims 15 to 20, wherein the configuration information further indicates a first priority threshold, and that the available time-frequency resource is used to send third sidelink control information and first data information comprises:
when priorities of the third sidelink control information and the first data information are higher than or equal to the first priority threshold, the available time-frequency resource is used to send the third sidelink control information and the first data information.

22. A communication apparatus, comprising a processing unit and a communication unit, wherein
the communication unit is configured to receive first sidelink control information and second sidelink control information, wherein the first sidelink control information is control information used for evolved universal terrestrial radio access E-UTRA radio access, and the second sidelink control information is control information used for new radio NR radio access; and
the processing unit is configured to determine a third available time-frequency resource based on the first sidelink control information and the second sidelink control information, wherein the third available time-frequency resource is used to send third sidelink control information and first data information, the third sidelink control information is the control information used for the NR radio access, and the first data information is data information used for the NR radio access.

23. The apparatus according to claim 22, wherein when determining the third available time-frequency resource based on the first sidelink control information and the second sidelink control information, the processing unit is specifically configured to:
determine a first available time-frequency resource based on the first sidelink control information;
determine a second available time-frequency resource based on the second sidelink control information; and
determine the third available time-frequency resource based on the first available time-frequency resource and the second available time-frequency resource.

24. The apparatus according to claim 23, wherein the third available time-frequency resource is an intersection of the first available time-frequency resource and the second available time-frequency resource.

25. The apparatus according to claim 22, wherein the processing unit comprises a first module and a second module, the first module supports E-UTRA-based communication, the second module supports NR-based communication, the first module comprises a first physical layer, and the second module comprises a second physical layer.

26. The apparatus according to claim 25, wherein when the processing unit determines the third available time-frequency resource based on the first sidelink control information and the second sidelink control information, the first module of the processing unit is configured to:
determine a first resource detection result based on the first sidelink control information;
the second module of the processing unit is configured to:
determine a second resource detection result based on the second sidelink control information; and
the second physical layer of the processing unit is configured to:
determine the third available time-frequency resource based on the first resource detection result and the second resource detection result, wherein the first resource detection result is from the first physical layer.

27. The apparatus according to claim 26, wherein the first resource detection result comprises a resource detection result of at least one slot in a sensing window, and the second resource detection result comprises the resource detection result of the at least one slot in the sensing window.

28. The apparatus according to claim 26, wherein the second module further comprises a media access control layer, and the second physical layer of the processing unit is further configured to:
send the third available time-frequency resource to the media access control layer.

29. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus, and the processor is configured to implement the method according to any one of claims 1 to 7 or the method according to any one of claims 8 to 14 by using a logic circuit or by executing code instructions.

30. A computer-readable storage medium, wherein the storage medium stores a computer program or instructions; and when the computer program or the instructions are executed by a communication apparatus, the method according to any one of claims 1 to 7 or the method according to any one of claims 8 to 14 is implemented.
